# EUROPÄISCHE PATENTSCHRIFT

(11) **EP 4 015 301 B1**
(45) Veröffentlichungstag und Bekanntmachung des Hinweises auf die Patenterteilung: **28.06.2023**
(21) Anmeldenummer: 21210575.3
(22) Anmeldetag: 25.11.2021
(51) Int. Cl.: B60N 2/64, B60N 2/22, B60N 2/02

(54) **FAHRZEUGSITZ MIT RÜCKENLEHNE**
VEHICLE SEAT WITH BACKREST
SIÈGE DE VÉHICULE POURVU DE DOSSIER

(30) Priorität: 18.12.2020 DE 102020134209
(43) Veröffentlichungstag der Anmeldung: 22.06.2022
(73) Patentinhaber: GRAMMER AG, 92289 Ursensollen (DE)
(72) Erfinder: Haller, Erwin, 92262 Birgland (DE); Krivenkov, Konstantin, 92224 Amberg (DE)
(74) Vertreter: Hannke, Christian

(56) Entgegenhaltungen:
- EP-A1- 2 719 575

## Beschreibung

Die Erfindung betrifft einen Fahrzeugsitz mit einer Rückenlehne, welche ein Rückenlehnenbasiselement und ein Rückenlehnenteil umfasst, wobei das Rückenlehnenteil ein mittleres Rückenlehnenelement umfasst, welches verschwenkbar an einem Rückenlehnenbasiselement angeordnet ist.

Bei der Benutzung von Nutzfahrzeugen, wie beispielsweise Traktoren, Gabelstaplern etc. ist es für den Fahrer oftmals notwendig nach hinten oder zur Seite zu blicken, da Rückwärtsfahrten notwendig sind oder hinten beziehungsweise seitlich an dem Fahrzeug angebrachte oder angehängte Komponenten überwacht oder kontrolliert werden müssen. Gegebenenfalls sind auch seitlich oder hinten angeordnete Betätigungsorgane zu bedienen. Der Fahrer beziehungsweise Insasse muss dabei seinen Oberkörper entsprechend drehen. In dieser Drehbewegung geben herkömmliche Fahrzeugsitze jedoch dem Insassen keine entsprechende Abstützung. Durch die fehlende Abstützung ermüdet der Fahrer schneller und der Sitzkomfort ist erheblich gemindert.

Die EP 2 719 575 zeigt einen Fahrzeugsitz mit einer Rückenlehne, welche ein Rückenlehnenteil und ein Rückenlehnenbasiselement umfasst, wobei das Rückenlehnenteil ein mittleres Rückenlehnenelement umfasst, welches verschwenkbar an dem Rückenlehnenbasiselement angeordnet ist.

Aufgabe der vorliegenden Erfindung ist es, einen Fahrzeugsitz bereitzustellen, welche die genannten Probleme löst.

Die Aufgabe wird durch den Gegenstand des unabhängigen Anspruchs1 gelöst. Vorteilhafte Ausgestaltungen sind den Unteransprüchen zu entnehmen.

Kerngedanke der Erfindung ist ein Fahrzeugsitz mit einer Rückenlehne, welche ein Rückenlehnenteil und ein Rückenlehnenbasiselement umfasst, wobei das Rückenlehnenteil ein mittleres Rückenlehnenelement umfasst, welches verschwenkbar an dem Rückenlehnenbasiselement angeordnet ist, wobei das Rückenlehnenteil zwei untere Rückenlehnenseitenelemente und zwei obere Rückenlehnenseitenelemente umfasst, welche jeweils mit dem mittleren Rückenlehnenelement mechanisch gekoppelt sind, wobei die beiden unteren Rückenlehnenseitenelemente verschwenkbar an dem Rückenlehnenbasiselement angeordnet sind, wobei jeweils zwischen einem unteren Rückenlehnenseitenelement und einem oberen Rückenlehnenseitenelement zumindest eine Gelenkeinrichtung vorgesehen ist, wobei je ein unteres Rückenlehnenseitenelement und ein oberes Rückenlehnenseitenelement in einem Winkel (α_{L}, α_{R}) zueinander angeordnet sind, wobei eine Verschwenkung des mittleren Rückenlehnenelements eine Änderung der Winkel (α_{L}, α_{R}) bewirkt, wobei die Gelenkeinrichtung zumindest ein erstes elastisches Element umfasst oder ist.

Der erfindungsgemäße Fahrzeugsitz umfasst demnach ein zumindest fünfteiliges Rückenlehnenteil, welches zur Abstützung des Insassen dient. Das mittlere Rückenlehnenelement, die zwei unteren Rückenlehnenseitenelemente und die zwei oberen Rückenlehnenseitenelemente werden im Folgenden auch als die Rückenlehnenelemente bezeichnet. Die mechanischen Kopplungen und das Anlenken eines oberen Rückenlehnenseitenelements an einem jeweiligen unteren Rückenlehnenseitenelement bewirken eine ergonomisch optimale Anpassung des Rückenlehnenteils an eine Drehbewegung eines Insassen. Ferner kann ein solches verschwenkbares Rückenlehnenteil auch zur Isolation von Querbeschleunigungen (Wanken) dienen. Durch die Ausgestaltung der Gelenkeinrichtung derart, dass diese zumindest ein elastisches Element umfasst, ist der Fahrzeugsitz konstruktiv einfach ausgestaltet und kostengünstig herzustellen.

Die Rückenlehne erstreckt sich entlang einer Höhenachse Z, einer Breitenachse Y und einer Längsachse X. Der Fahrzeugsitz erstreckt sich entlang einer Höhenachse Z' einer Breitenachse Y' und einer Längsachse X'.

Vorzugsweise sind ein unteres Rückenlehnenseitenelement und oberes Rückenlehnenseitenelement linksseitig von dem mittleren Rückenlehnenelement angeordnet und bilden einen linken Seitenabschnitt des Rückenlehnenteils aus. Vorteilhafterweise sind ein unteres Rückenlehnenseitenelement und oberes Rückenlehnenseitenelement rechtsseitig von dem mittleren Rückenlehnenelement angeordnet und bilden einen rechten Seitenabschnitt des Rückenlehnenteils aus.

Vorzugsweise ist in einer Grundstellung der Rückenlehne oder des Fahrzeugsitzes das mittlere Rückenlehnenelement im Wesentlichen in einer ersten Ebene E1 angeordnet, welche durch eine Höhenachse Z der Rückenlehne und eine Breitenachse Y der Rückenlehne aufgespannt ist. Vorteilhafterweise ist in der Grundstellung der Rückenlehne der linke Seitenabschnitt des Rückenlehnenteils im Wesentlichen in einer zweiten Seitenebene E2 angeordnet, welche durch die Höhenachse Z der Rückenlehne und einer ersten Achse A1 aufgespannt ist. Vorteilhafterweise ist in der Grundstellung der Rückenlehne der rechte Seitenabschnitt des Rückenlehnenteils im Wesentlichen in einer dritten Seitenebene E3 angeordnet, welche durch die Höhenachse Z der Rückenlehne und einer zweiten Achse A2 aufgespannt ist. Vorzugsweise schließen die Breitenachse Y und erste Achse A1 einen Neigungswinkel β, ein. Bevorzugt schließen die Breitenachse Y und zweite Achse A2 einen Neigungswinkel β₂ ein. Vorzugsweise sind die Neigungswinkel β₁, β₂ in einem Bereich zwischen 5° und 80°, weiter bevorzugt in einem Bereich zwischen 20° und 70°, weiter bevorzugt in einem Bereich zwischen 30° und 50°. Vorteilhafterweise ist der erste Neigungswinkel β, gleich dem zweiten Neigungswinkel β₂. Durch diese nach vorne geneigte Anordnung der Seitenabschnitte wird eine Abstützung des Insassen in den seitlichen Richtungen erreicht. Die Rückenlehne weist somit vorteilhafterweise eine Art Schalenform auf, welche dem Insassen einen gewissen Halt bezüglich in der Breitenrichtung wirkender Kräfte gibt.

Bevorzugt sind die oberen Rückenlehnenseitenelemente entlang der Höhenachse über den unteren Rückenlehnenseitenelementen angeordnet. Nach einer bevorzugten Ausführungsform sind zumindest in der Grundstellung der Rückenlehne die oberen Rückenlehnenseitenelemente und die unteren Rückenlehnenseitenelemente voneinander beabstandet. Vorteilhafterweise ist zumindest in der Grundstellung der Rückenlehne ein Schlitz zwischen den oberen Rückenlehnenseitenelementen und den unteren Rückenlehnenseitenelementen ausgebildet. Vorteilhafterweise verläuft der Schlitz ausgehend von einem inneren Bereich eines Seitenabschnitts des Rückenlehnenteils entlang der Höhenachse schräg nach oben zu einem äußeren Bereich eines Seitenabschnitts des Rückenlehnenteils. Der innere Bereich des Seitenabschnitts ist entlang der Breitenrichtung Y näher an dem mittleren Rückenlehnenelement angeordnet als der äußere Bereich des Seitenabschnitts. Die beiden Schlitze haben zum einen den Vorteil eine Belüftung des Rückens des Insassen zu ermöglichen zum anderen wird eine vorteilhafte Relativbewegung der oberen und unteren Rückenlehnenseitenelemente zueinander erleichtert.

Vorzugsweise ist ein erster Kopplungsmechanismus vorgesehen, mittels welchem eine mechanische Kopplung des mittleren Rückenlehnenelements mit den beiden unteren Rückenlehnenseitenelementen erfolgt. Vorteilhafterweise ist ein zweiter Kopplungsmechanismus vorgesehen, mittels welchem eine mechanische Kopplung des mittleren Rückenlehnenelements mit den beiden oberen Rückenlehnenseitenelementen erfolgt. In einer bevorzugten Grundstellung des Fahrzeugsitzes oder der Rückenlehne ist der Insasse nach vorne ausgerichtet. In dieser vorteilhaften Grundstellung erstreckt sich das mittleres Rückenlehnenelement im Wesentlichen entlang der Höhenachse Z und dient somit als Abstützung des Wirbelsäulenbereichs oder eines Teils des Wirbelsäulenbereichs des Insassen. Vorteilhafterweise erfolgt durch eine Drehbewegung eines Insassen ein Krafteintrag in das Rückenlehnenteil. Dieser Krafteintrag wirkt, abhängig von der Sitzhaltung des Insassen auf eines, mehrere oder alle der zumindest fünf Rückenlehnenelemente. Vorteilhafterweise wirkt durch die vorteilhaften mechanischen Kopplungen der oberen und unteren Rückenlehnenseitenelemente mit dem mittleren Rückenlehnenelement der Krafteintrag auf alle Rückenlehnenelemente. Vorzugsweise verursacht der Krafteintrag eine Verschwenkung des mittleren Rückenlehnenelements und der beiden unteren Rückenlehnenseitenelemente relativ zum Rückenlehnenbasiselement. Bevorzugt wird dabei das mittlere Rückenlehnenelement in Richtungen parallel zu der Breitenachse Y verschwenkt. Vorteilhafterweise bilden der erste Kopplungsmechanismus und der zweite Kopplungsmechanismus eine Zwangssteuerung aus.

Nach einer weiteren vorteilhaften Ausführungsform ist in den äußeren Bereichen des linken Seitenabschnitts und des rechten Seitenabschnitts des Rückenlehnenteils jeweils eine Gelenkeinrichtung vorgesehen. Vorteilhafterweise ist die zumindest eine Gelenkeinrichtung zumindest abschnittsweise in dem jeweiligen Schlitz angeordnet. Vorzugsweise ist in der Grundstellung der Rückenlehne ein Abstand zwischen einem unteren Rückenlehnenseitenelement und einem entsprechen zugehörigen oberen Rückenlehnenseitenelement in dem Schlitz entlang seiner gesamten Länge im Wesentlichen konstant. Vorteilhafterweise verändert sich bei einer Verschwenkung des mittleren Rückenlehnenelements entlang einer Richtung parallel zur Breitenachse aufgrund der mechanischen Kopplungen und einer Auslenkung der Gelenkeinrichtung ein Abstand zwischen einem unteren Rückenlehnenseitenelement und einem oberen Rückenlehnenseitenelement zumindest in dem inneren Bereich eines Seitenabschnitts des Rückenlehnenteils. Vorzugsweise wird der Abstand zwischen einem unteren Rückenlehnenseitenelement und einem entsprechend zugehörigen oberen Rückenlehnenseitenelement kleiner bei einer Verschwenkung in Richtung zu dem jeweiligen Seitenabschnitt.

Nach einer weiteren vorteilhaften Ausführungsform ist das zumindest eine erste elastische Element der Gelenkeinrichtung jeweils an einem der unteren Rückenlehnenseitenelemente und an einem oberen Rückenlehnenseitenelement direkt oder indirekt befestigt. Das zumindest eine erste elastische Element weist eine Höhenerstreckung HE auf. Bei einer Bewegung der Rückenlehnenseitenelemente relativ zueinander wird das zumindest eine erste elastische Element um seine Höhenerstreckung HE verdreht und wird weiterhin expandiert oder komprimiert. Die Expansion beziehungsweise Komprimierung kann beispielsweise gleichförmig sein, eine Scherung oder eine anderweitige Verformung entlang einer Längsachse LE. Die Gelenkeinrichtung kann vorteilhafterweise auch mehrere erste elastische Elemente umfassen, welche entlang einer Längserstreckung des Schlitzes angeordnet sind. Die ersten elastischen Elemente können dabei bevorzugt über die gesamte Längserstreckung des Schlitzes, oder lediglich entlang eines einen Abschnitt der Längserstreckung des Schlitzes angeordnet sein. Denkbar wäre auch, dass Gelenkeinrichtung als ein einziges erstes elastisches Element ausgebildet ist. Dieses eine erste elastische Element kann ebenso bevorzugt über die gesamte Längserstreckung des Schlitzes oder lediglich entlang eines Abschnitts der Längserstreckung des Schlitzes angeordnet sein. Vorteilhafterweise umfasst die Gelenkeinrichtung zumindest ein Befestigungselement, welches aus einem formstabilen Kunststoff besteht. Vorteilhafterweise ist das zumindest eine erste elastische Element an dem zumindest einen Befestigungselement angeordnet. Bevorzugt sind zwei plattenartig ausgebildete Befestigungselemente vorgesehen, zwischen denen das zumindest eine erste elastische Element oder die mehreren ersten elastischen Elemente angeordnet sind. Die Befestigungselemente dienen zur Befestigung der Gelenkeinrichtung an einem der oberen Rückenlehnenseitenelemente und dem entsprechenden unteren Rückenlehnenseitenelement. Vorzugsweise wird ein Spritzgussverfahren angewendet, um die Befestigungselemente und die elastischen Elemente herzustellen. Vorteilhafterweise werden dabei die ersten elastischen Elemente in die Befestigungselemente eingespritzt. Denkbar wäre auch, dass an den oberen und den unteren Rückenlehnenseitenelementen zumindest eine Hinterschneidung, bevorzugt mehrere Hinterschneidungen vorgesehen sind und das erste elastische Element direkt an diese Rückenlehnenelement angespritzt wird. Durch das vorteilhafte Vorsehen der Hinterschneidungen kann eine ausreichende mechanische Belastbarkeit dieser Verbindung gewährleistet werden.

Nach einer weiteren vorteilhaften Ausführungsform umfasst der zweite Kopplungsmechanismus jeweils eine Kopplungssvorrichtung, mittels welcher jeweils ein oberes Rückenlehnenseitenelement an dem mittleren Rückenlehnenelement angeordnet ist. Vorzugsweise ist demnach das linksseitige obere Rückenlehnenseitenelement mit einer linksseitigen Kopplungsvorrichtung an einem linken Seitenbereich des mittleren Rückenlehnenelements angeordnet. Vorzugsweise ist demnach das rechtsseitige obere Rückenlehnenseitenelement mit einer rechtsseitigen Kopplungsvorrichtung an einem rechten Seitenbereich des mittleren Rückenlehnenelements angeordnet. Vorteilhafterweise umfasst die Kopplungsvorrichtung zumindest ein zweites elastisches Element, welches zwischen einem oberen Rückenlehnenseitenelement und dem mittleren Rückenlehnenelement angeordnet ist. Die Kopplungsvorrichtung kann vorteilhafterweise auch mehrere zweite elastische Elemente umfassen, welche entlang einer Längserstreckung des oberen Rückenlehnenseitenelements und/oder des mittleren Rückenlehnenelements angeordnet sind. Die zweiten elastischen Elemente können dabei bevorzugt über die gesamte Längserstreckung des oberen Rückenlehnenseitenelements und/oder des mittleren Rückenlehnenelements angeordnet sein oder lediglich entlang eines Abschnitts der Längserstreckung des oberen Rückenlehnenseitenelements und/oder des mittleren Rückenlehnenelements angeordnet sein. Denkbar wäre auch, dass eine Kopplungsvorrichtung als ein einziges zweites elastisches Element ausgebildet ist. Dieses eine zweite elastische Element kann ebenso bevorzugt über die gesamte Längserstreckung des oberen Rückenlehnenseitenelements und/oder des mittleren Rückenlehnenelements angeordnet sein, oder lediglich entlang eines Abschnitts der Längserstreckung des oberen Rückenlehnenseitenelements und/oder des mittleren Rückenlehnenelements angeordnet sein.

Vorteilhafterweise erlaubt die Kopplungsvorrichtung eine Translationsbewegung des oberen Rückenlehnenseitenelements relativ zu dem mittleren Rückenlehnenelement entlang einer Längsachse LA des mittleren Rückenlehnenelements. Bevorzugt erlaubt die Kopplungsvorrichtung eine Drehbewegung des oberen Rückenlehnenseitenelements relativ zu dem mittleren Rückenlehnenelement um eine Drehachse DA, welche parallel zu der Längsachse LA des mittleren Rückenlehnenelements verläuft. Bei einer Verschwenkung des mittleren Rückenlehnenelements erfolgt vorteilhafterweise sowohl eine Translationsbewegung des oberen Rückenlehnenseitenelement relativ zu dem mittleren Rückenlehnenelement als auch eine Drehbewegung des oberen Rückenlehnenseitenelement relativ zu dem mittleren Rückenlehnenelement. Bei dieser Bewegung wird das zumindest eine zweite elastische Element um die Drehachse DA verdreht und entlang der Längsachse LA beziehungsweise der Längsachse des elastischen Elements LE expandiert oder komprimiert. Die Expansion beziehungsweise Komprimierung kann beispielsweise gleichförmig sein, eine Scherung oder eine anderweitige Verformung entlang der Längsachse LE. Vorzugsweise besteht das zumindest eine zweite elastische Element aus einem Elastomer. Vorteilhafterweise umfasst die Kopplungsvorrichtung zumindest ein Befestigungselement, welches aus einem formstabilen Kunststoff besteht. Vorteilhafterweise ist das zumindest eine zweite elastische Element an dem zumindest einen Befestigungselement angeordnet. Bevorzugt sind zwei plattenartig ausgebildete Befestigungselemente vorgesehen, zwischen denen sich das zumindest eine zweite elastische Element oder die mehreren zweiten elastischen Elemente angeordnet sind. Die Befestigungselemente dienen zur Befestigung der Kopplungsvorrichtung an einem der oberen Rückenlehnenseitenelemente und dem mittleren Rückenlehnenelement. Vorzugsweise wird ein Spritzgussverfahren angewendet, um Befestigungselemente und die zweiten elastische Elemente herzustellen. Vorteilhafterweise werden dabei die zweiten elastischen Elemente in die Befestigungselemente eingespritzt. Denkbar wäre auch, dass an den oberen Rückenlehnenseitenelementen und an dem mittleren Rückenlehnenelement zumindest eine Hinterschneidung bevorzugt mehrere Hinterschneidungen vorgesehen sind und das zweite elastische Element direkt an diese Rückenlehnenelement angespritzt wird. Durch das vorteilhafte Vorsehen der Hinterschneidungen kann eine ausreichende mechanische Belastbarkeit dieser Verbindung gewährleistet werden.

Nach einer weiteren vorteilhaften Ausführungsform weist das Rückenlehnenbasiselement einen mittleren Bereich auf, welcher sich im Wesentlichen parallel zu der ersten Ebene E1 erstreckt. Ferner ist es von Vorteil, dass das Rückenlehnenbasiselement zwei Seitenbereiche aufweist, welche vorteilhafterweise mit dem mittleren Bereich starr verbunden sind. Bevorzugt ist das Rückenlehnenbasiselement einteilig oder einstückig ausgebildet. Vorzugsweise erstreckt sich ein linker Seitenbereich des Rückenlehnenbasiselements im Wesentlichen parallel zu der zweiten Seitenebene E2. Bevorzugt erstreckt sich ein rechter Seitenbereich des Rückenlehnenbasiselements im Wesentlichen parallel zu der dritten Seitenebene E3. Durch eine derart gewinkelte Ausgestaltung des Rückenlehnenbasiselements wird vorzugsweise die Ausgestaltung des Rückenlehnenteils in der Grundstellung der Rückenlehne vorgegeben.

Nach einer weiteren vorteilhaften Ausführungsform ist das mittlere Rückenlehnenelement um eine erste Schwenkachse verschwenkbar an dem mittleren Bereich des Rückenlehnenbasiselements angeordnet. Die erste Schwenkachse kann vorteilhafterweise eine reale oder eine fiktive Schwenkachse sein, welche sich parallel zu der Längsachse X der Rückenlehne erstreckt. Vorzugsweise ist das mittlere Rückenlehnenelement mittels einer ersten Schwenkachse SA1 an dem Rückenlehnenbasiselement gelagert. Bevorzugt ist ein erstes Befestigungselement vorgesehen, welches mit dem mittleren Rückenlehnenelement fest verbunden ist und welches verschwenkbar um die erste Schwenkachse SA1 ist. Durch die Verwendung eines stabilen Befestigungselements kann das untere Rückenlehnenseitenelement leichter gebaut werden.

Nach einer besonders bevorzugten Ausführungsform sind die unteren Rückenlehnenseitenelemente jeweils um eine zweite oder dritte Schwenkachse verschwenkbar an den Seitenbereichen des Rückenlehnenbasiselements angeordnet. Die zweite Schwenkachse und/oder die dritte Schwenkachse können vorteilhafterweise eine reale oder eine fiktive Schwenkachse sein. Vorzugsweise erstrecken sich die zweite und dritte Schwenkachse SA2, SA3 entlang der Längsachse X und der Höhenachse Z schräg nach oben. Die zweite und/oder die dritte Schwenkachse verlaufen ausgehend von einem hinteren Bereich der Rückenlehne, welche von Insassen abgewandt ist, zu den jeweiligen unteren Rückenlehnenseitenelementen beziehungsweise den jeweiligen Befestigungselementen schräg nach oben. Die zweite und/oder die dritte Schwenkachse SA2, SA3 schließen somit vorzugsweise einen Winkel γ₂, γ₃ mit einer Ebene ein, welche durch die Längsachse X und die Breitenachse Y aufgespannt wird. Vorzugsweise sind diese Winkel γ₂, γ₃ in einem Bereich wischen 10° und 80°, weiter bevorzugt in einem Bereich zwischen 20° und 70°, weiter bevorzugt in einem Bereich zwischen 30° und 60°. Vorzugsweise ist ein zweites Befestigungselement vorgesehen, welches mit dem linksseitig angeordneten unteren Rückenlehnenseitenelement fest verbunden ist und welches verschwenkbar um die zweite Schwenkachse ist. Bevorzugt ist ein drittes Befestigungselement vorgesehen, welches mit dem rechtsseitig angeordneten Rückenlehnenseitenelement fest verbunden und welches verschwenkbar um die dritte Schwenkachse ist. Durch den Verlauf der zweiten und dritten Schwenkachse schräg nach oben und nach vorne tritt bei einer Verschwenkung der unteren Rückenlehnenseitenelemente der vorteilhafte Effekt ein, dass ein entlang der Höhenachse Z oberer Randbereich gleichzeitig entlang der Breitenachse Y äußerer Randbereich der unteren Rückenlehnenseitenelemente entlang der Längsachse nach vorn oder hinten tritt. So tritt bei einer Verschwenkung zu einer bestimmten Seite dieser Bereich nach vorne und bei einer Verschwenkung in die entgegengesetzte Richtung tritt dieser Bereich nach hinten.

Nach einer weiteren bevorzugten Ausführungsform überträgt der erste Kopplungsmechanismus eine Schwenkbewegung des mittleren Rückenlehnenelements zu den linken unteren Rückenlehnenseitenelement und/oder zu den rechten unteren Rückenlehnenseitenelement und umgekehrt. Vorzugsweise überträgt der erste Kopplungsmechanismus eine Schwenkbewegung des ersten Befestigungselements zu dem zweiten Befestigungselement und dem dritten Befestigungselement. Vorzugsweise überträgt der erste Kopplungsmechanismus eine Schwenkbewegung des zweiten Befestigungselements und/oder des dritten Befestigungselements zu dem ersten Befestigungselement. Vorteilhafterweise weist der erste Kopplungsmechanismus eine erste Koppelstange auf, welche das erste Befestigungselement und das zweite Befestigungselement verbindet. Vorzugsweise weist der erste Kopplungsmechanismus eine zweite Koppelstange auf, welche das erste Befestigungselement und das dritte Befestigungselement verbindet. Vorzugsweise sind die Koppelstangen jeweils mittels eines Kugelgelenks an den Befestigungselementen befestigt. Die Erfindung ist jedoch nicht auf diese Ausgestaltung beschränkt. Es kommen selbstverständlich auch noch weitere Kopplungen in Betracht, welche die Schwenkbewegungen entsprechend übertragen können. Derartige Kopplungsmechanismen könnten beispielsweise Getriebe, Bowdenzüge oder Ähnliches sein.

Nach einer weiteren bevorzugten Ausführungsform sind die oberen Rückenlehnenseitenelemente und die unteren Rückenlehnenseitenelemente als plattenartige Elemente ausgebildet. Vorteilhafterweise sind die plattenartigen Elemente zur Aufnahme von Polsterelementen ausgebildet. Denkbar wäre jedoch auch, dass keine weiteren Polsterelemente vorgesehen sind oder lediglich eine polsternde Schicht auf die plattenartigen Elemente aufgebracht ist. Die vorteilhaften Polsterelemente und/oder die plattenartigen Elemente bilden eine entsprechende Auflage- oder Abstützfläche für den Insassen. Vorzugsweise ist diese Auflagefläche durch den Schlitz zumindest zweigeteilt.

Vorteilhafterweise ist bei einer Verschwenkung des mittleren Rückenlehnenelements zu einem Seitenabschnitt des Rückenlehnenteils hin, der Winkel (α_{L}, α_{R}) ein stumpfer Winkel. Bevorzugt ist bei einer Verschwenkung des mittleren Rückenlehnenelements zu einem Seitenabschnitt des Rückenlehnenteils hin, ein oberer Randbereich des unteren Rückenlehnenseitenelements und ein unterer Randbereich des oberen Rückenlehnenseitenelements zumindest in einem äußeren Randbereich des Seitenabschnitts entlang der Längsachse X nach vorne verlagert. Dieser nach vorne bewegte Bereich wird als eine Art Auswölbung nach vorne der Auflagefläche wahrgenommen. Bei einer Drehbewegung des Oberkörpers im Sitzen knickt der seitliche hintere Bereich des Oberkörpers etwas ein. Dieser Bereich erfährt eine Unterstützung durch die beschriebene Auswölbung der Auflageflache, wodurch ein ergonomisch angenehmer Fahrzeugsitz bereitgestellt wird.

Nach einer weiteren vorteilhaften Ausführungsform ist ein drittes elastisches Element vorgesehen, welches die beiden ersten elastischen Elemente und die beiden zweiten elastischen Elemente umfasst und weiterhin die unteren Rückenlehnenseitenelemente und das mittlere Rückenlehnenelement verbindet. Das dritte elastische Element ist somit zwischen jeweils einem oberen und einem unteren Rückenlehnenseitenelement, zwischen jeweils einem oberen Rückenlehnenseitenelement und dem mittleren Rückenlehnenseitenelement und zwischen jeweils einem unteren Rückenlehnenseitenelement und dem mittleren Rückenlehnenseitenelement angeordnet. Vorzugsweise ist ein der jeweilige Abstand zwischen den Rückenlehnenelementen zumindest teilweise oder im Wesentlichen vollständig durch das dritte elastische Element ausgefüllt. Vorteilhafter weise besteht das dritte elastische Element aus einem elastischen Kunstsoff und/oder einem Elastomer, welcher in den jeweiligen Abstand zwischen den Rückenlehnenelementen eingespritzt wird. Vorteilhafterweise werden hierzu die zumindest fünf Rückenlehnenelemente in eine Spritzgussform eingelegt. Anschließend kann ein elastischer Kunstsoff in die Zwischenräume beziehungsweise Abstände zwischen den Rückenlehnenelementen eingespritzt werden. Vorteilhafterweise ist ein Dicke des dritten elastischen Elements in den Abschnitten der ersten und zweiten elastischen Elemente, also zwischen den oberen und den unteren Rückenlehnenseitenelementen und zwischen den oberen Rückenlehnenseitenelementen und dem mittleren Rückenlehnenseitenelement größer als in den Abschnitten des dritten elastischen Elementes, welche sich zwischen den unteren Rückenlehnenseitenelementen und dem mittleren Rückenlehnenseitenelement befinden. Dies ist vorteilhaft, da in den Bereichen der ersten und zweiten elastischen Elemente größere Kräfte auf das dritte elastische Element wirken. Vorteilhafterweise sind an den Rückenlehnenelementen Hinterschneidungen vorgesehen, um eine ausreichende mechanische Belastbarkeit zwischen den Rückenlehnenelementen und dem dritten elastischen Element zu gewährleisten.

Nach einer weiteren bevorzugten Ausführungsform ist das mittlere Rückenlehnenelement zweiteilig ausgestaltet. Vorzugsweise sind die beiden Abschnitte des mittleren Rückenlehnelements durch eine weitere Gelenkeinrichtung miteinander verbunden. Bevorzugt ist die Gelenkeinrichtung in einem unteren Bereich des mittleren Rückenlehnenelements angeordnet. Vorteilhafterweise ist die weitere Gelenkeinrichtung in oder über dem Lendenwirbelbereich des Insassen angeordnet. Vorteilhafterweise ist ein oberer Abschnitt des mittleren Rückenlehnenelements relativ zu dem unteren Abschnitt entlang der Längsachse X verschwenkbar. Durch eine solche Verschwenkung kann ein Haltungsausgleich beziehungsweise eine Lordose/Kyphose des Insassen ausgeglichen werden. Vorteilhafterweise ist die Neigung des oberen Abschnitts des mittleren Rückenlehnenelements durch einen Stellantrieb, beispielsweise ein Elektromotor, hydraulisch, pneumatisch oder aber auch händisch einstellbar.

Nach einer weiteren bevorzugten Ausführungsform ist das Rückenlehnenbasiselement um eine Neigungsachse drehbar an einem Sitzbasiselement angeordnet. Hierdurch kann die Neigung der Rückenlehne modifiziert werden. Diese Neigung kann selbstverständlich motorisch, mechanisch oder anderweitig einstellbar sein. Ferner kann eine Arretierungsvorrichtung vorgesehen sein, mittels welcher diese Neigung arretierbar ist.

Nach einer weiteren bevorzugten Ausführungsform ist eine Arretierungseinrichtung vorgesehen, mittels welcher die Drehposition des Rückenlehnenteils arretierbar ist. Eine Drehposition wird durch die Verschwenkung eines mittleren Rückenlehnenelements, die Verschwenkungen der unteren Rückenlehnenseitenelemente und die relativen Änderungen der Ausrichtungen beziehungsweise der Positionen Rückenlehnenelement zueinander definiert. Die Grundstellung der Rückenlehne ist selbstverständlich auch als eine solche Drehposition aufzufassen. Die Arretierungseinrichtung kann beispielsweise derart ausgestaltet sein, dass die Verschwenkung des mittleren Rückenlehnenelements arretiert wird. Durch die mechanischen Kopplungen der Rückenlehnenelemente werden durch eine solche Arretierung auch die weiteren Rückenlehnenelemente in ihrer Position beziehungsweise Ausrichtung festgelegt. Die Arretiereinrichtung kann über eine Bedieneinrichtung bedient werden. Die Bedieneinrichtung kann ein mechanisches, beispielsweise ein Bowdenzugsystem, oder ein elektrisches System, beispielsweise einen elektrischen Stellantrieb umfassen.

Vorteilhafterweise ist eine Rückstelleinrichtung vorgesehen, mittels welcher das Rückenlehnenteil in die Grundstellung rückführbar ist. Die Rückstelleinrichtung kann eine mechanische Einrichtung, beispielsweise eine Federanordnung ein elektrischer Stellantrieb oder eine hydraulische oder pneumatische Einrichtung sein.

Nach einer weiteren bevorzugten Ausführungsform ist eine Antriebseinrichtung vorgesehen, mittels welcher das Rückenlehnenteil in eine Drehposition bringbar ist. Die Antriebseinrichtung kann beispielsweise derart ausgestaltet sein, dass die Verschwenkung des mittleren Rückenlehnenelements angetrieben wird. Durch die mechanischen Kopplungen der Rückenlehnenelemente werden durch einen solchen Antrieb auch die weiteren Rückenlehnenelemente in eine entsprechende Position beziehungsweise Ausrichtung gebracht. Eine solche Antriebseinrichtung kann beispielsweise ein Stellantrieb vorzugsweise mit einem Elektromotor oder ein hydraulischer oder pneumatischer Antrieb sein.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1a, 1b, 1c: zeigen eine isometrische Ansicht des Fahrzeugsitzes nach einer Ausführungsform in einer Grundstellung einer Verschwenkung nach links und einer Verschwenkung nach rechts;
- Fig. 2a, 2b, 2c: zeigen eine isometrische Ansicht eines Fahrzeugsitzes nach einer Ausführungsform ohne Polsterelemente in einer Grundstellung einer Verschwenkung nach links und einer Verschwenkung nach rechts;
- Fig. 3a, 3b, 3c: zeigen eine Draufsicht eines Fahrzeugsitzes nach einer Ausführungsform in einer Grundstellung einer Verschwenkung nach links und einer Verschwenkung nach rechts;
- Fig. 4a, 4b, 4c: zeigen eine Draufsicht eines Fahrzeugsitzes nach einer Ausführungsform ohne Polsterelemente in einer Grundstellung einer Verschwenkung nach links und einer Verschwenkung nach rechts;
- Fig. 5a, 5b, 5c: zeigen eine isometrische Ansicht eines Fahrzeugsitzes nach einer Ausführungsform in einer Grundstellung einer Verschwenkung nach links und einer Verschwenkung nach rechts;
- Fig. 6a, 6b, 6c: zeigen eine isometrische Ansicht eines Fahrzeugsitzes nach einer Ausführungsform in einer Grundstellung einer Verschwenkung nach links und einer Verschwenkung nach rechts;
- Fig. 7a, 7b, 7c: zeigen eine Ansicht von hinten eines Fahrzeugsitzes nach einer Ausführungsform in einer Grundstellung einer Verschwenkung nach links und einer Verschwenkung nach rechts;
- Fig. 8: eine isometrische Ansicht einer Rückenlehne nach einer Ausführungsform;
- Fig. 9a, 9b: eine Hinteransicht und eine Vorderansicht eines Rückenlehnenbasiselements;
- Fig. 10a bis 10f: verschiedene Ansichten und Schnittansichten eines Rückenlehnenbasiselements nach einer Ausführungsform;
- Fig. 11: eine Vorderansicht und eine Hinteransicht eines Rückenlehnenteils nach einer Ausführungsform;
- Fig 12: eine Explosionsdarstellung eines Rückenlehnenteils nach einer Ausführungsform;
- Fig. 13a, 13b, 13c: zeigen Ansichten eines Rückenlehnenteils nach einer Ausführungsform in einer Grundstellung einer Verschwenkung nach links und einer Verschwenkung nach rechts.
- Fig. 14a, 14b, 14c: zeigen ein elastisches Element nach einer Ausführungsform;
- Fig. 15a, 15b: zeigen ein elastisches Element nach einer Ausführungsform.
- Fig. 16: zeigt eine Ansicht des Rückenlehnenteils nach einer Ausführungsform;
- Fig. 17: zeigt eine Ansicht des Fahrzeugsitzes nach einer Ausführungsform.

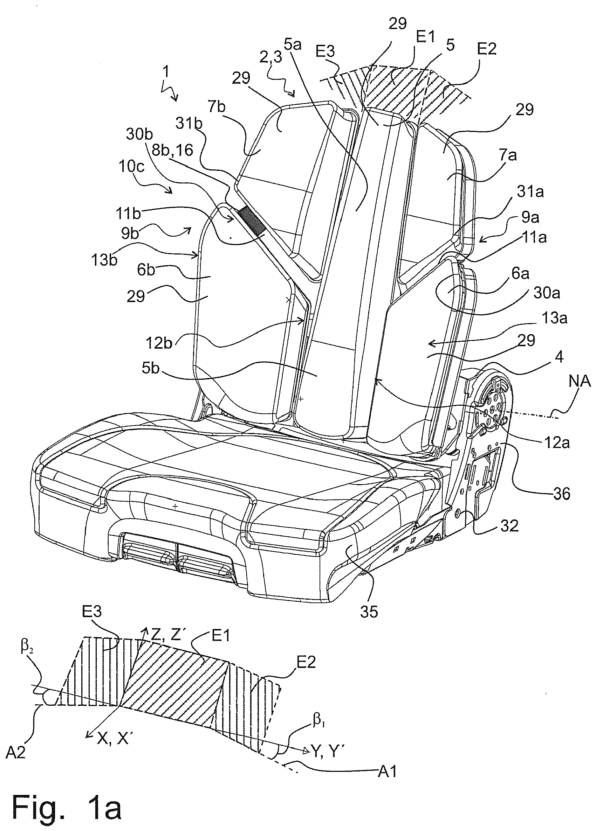

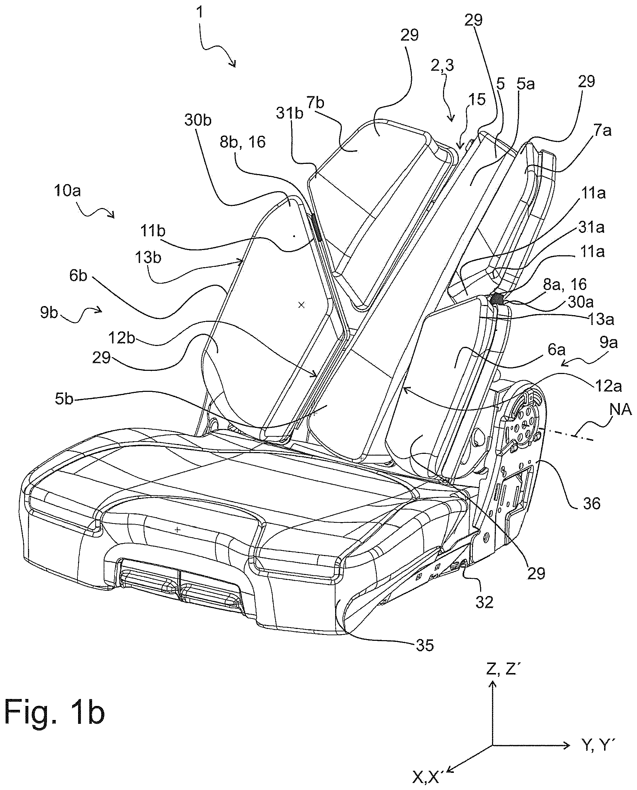

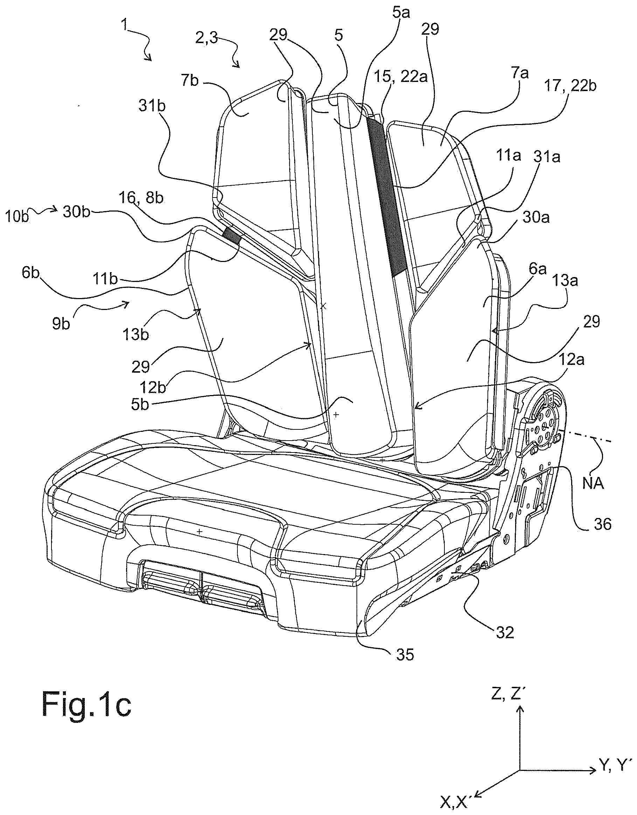

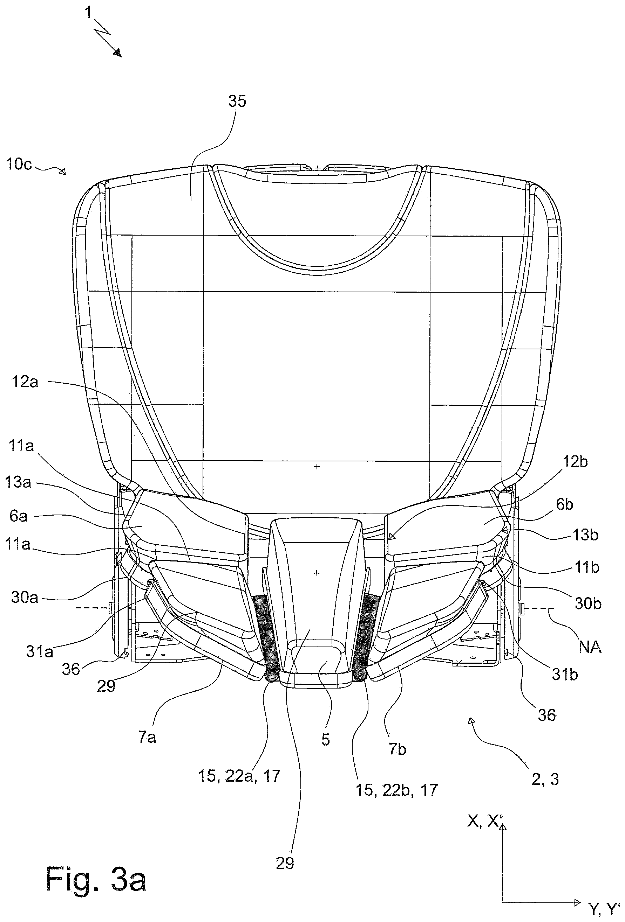

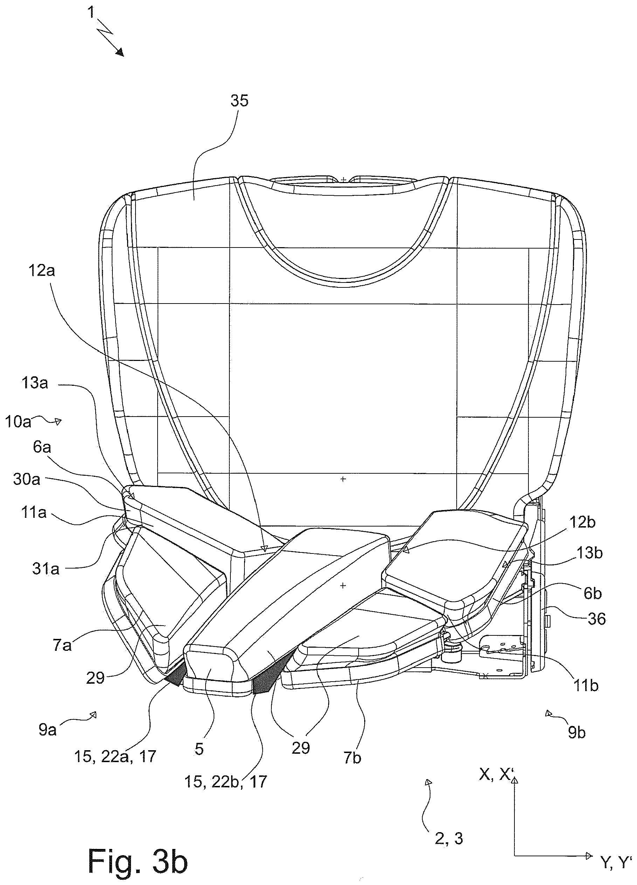

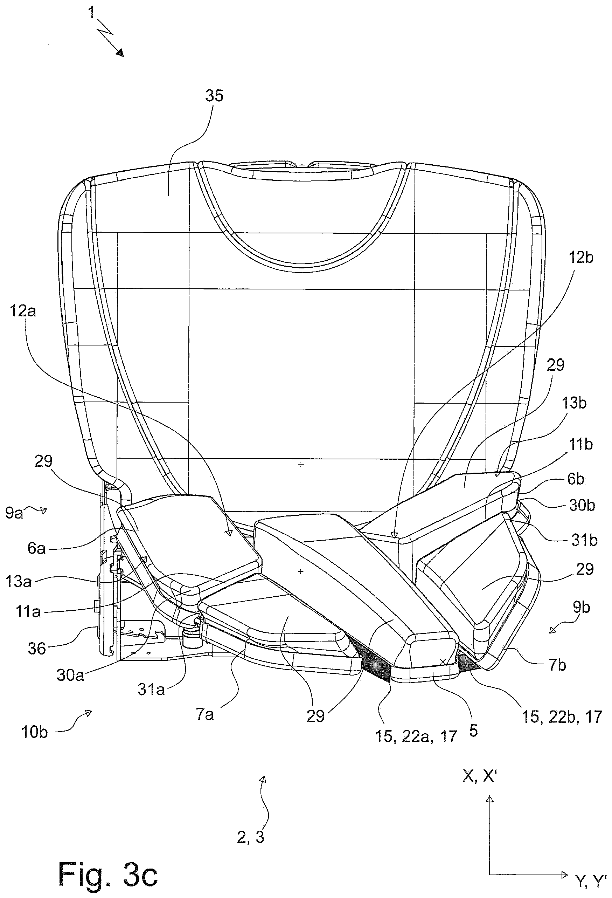

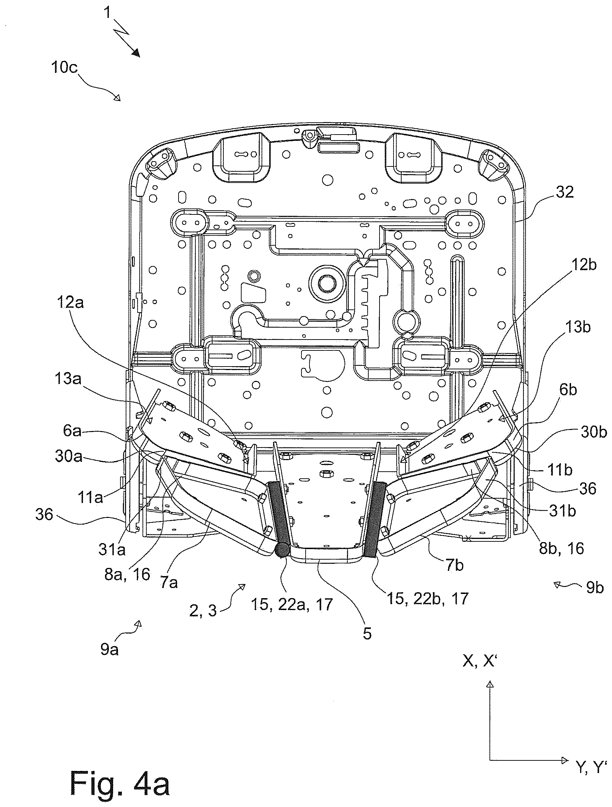

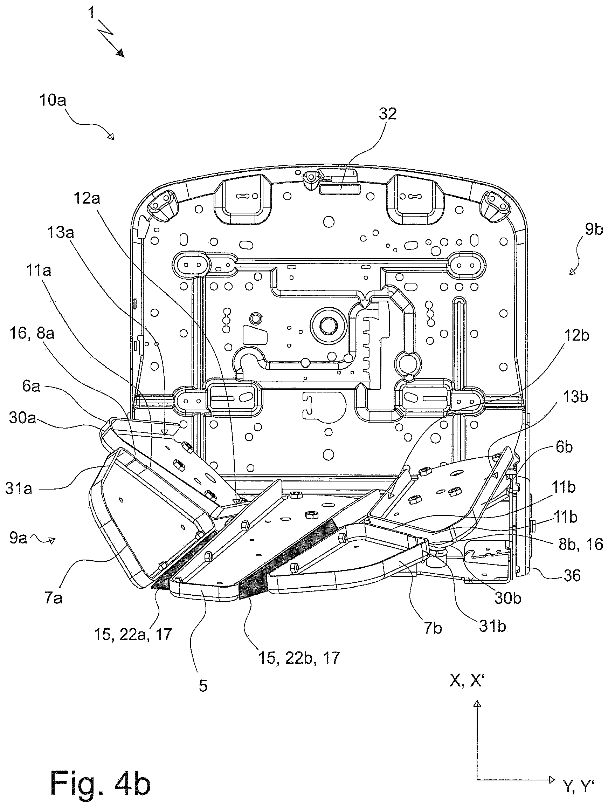

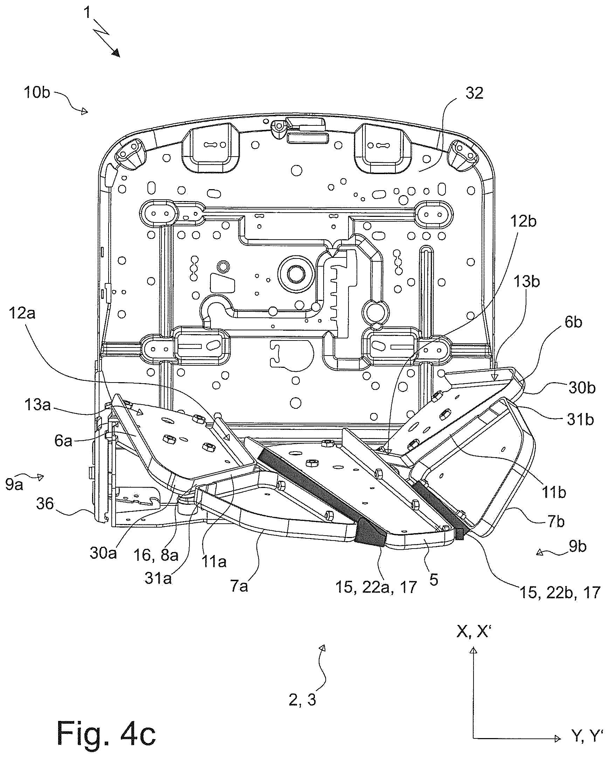

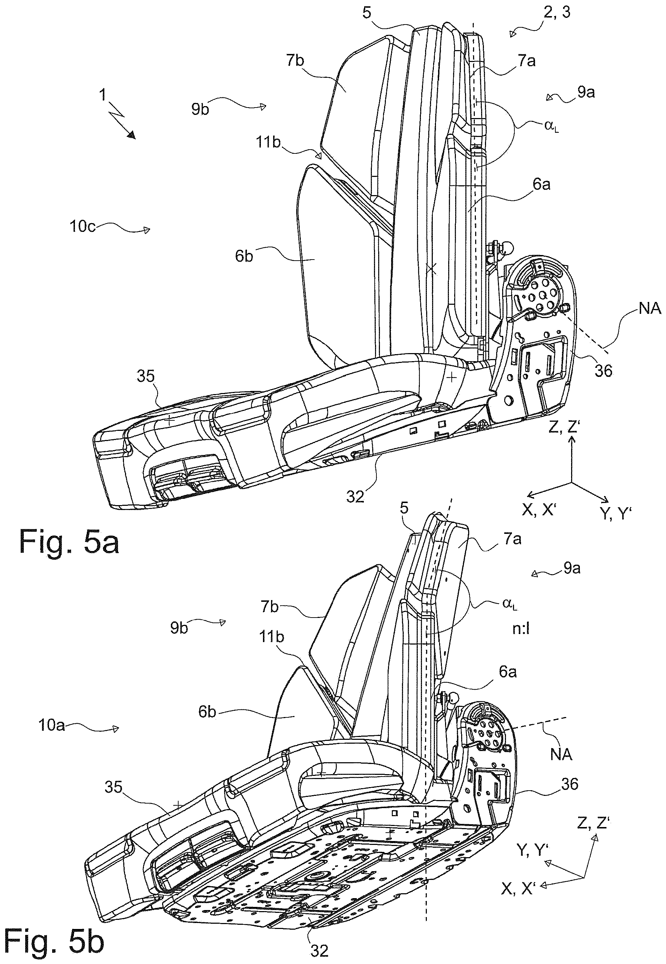

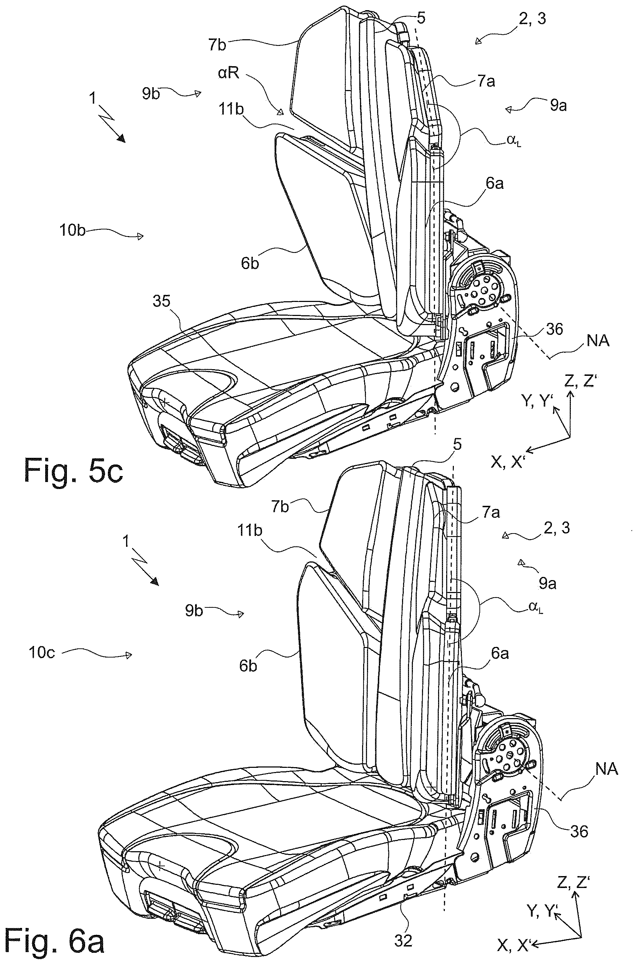

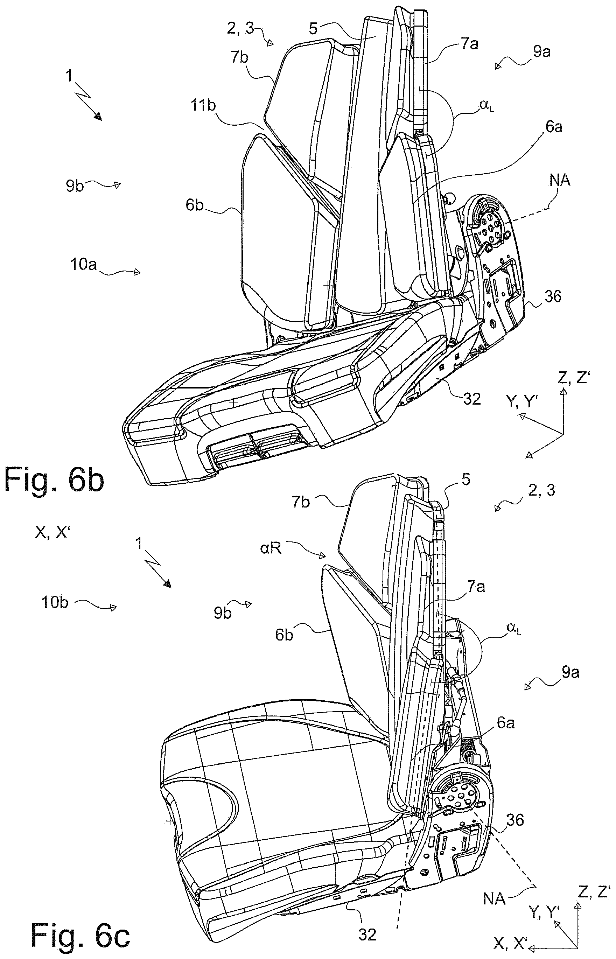

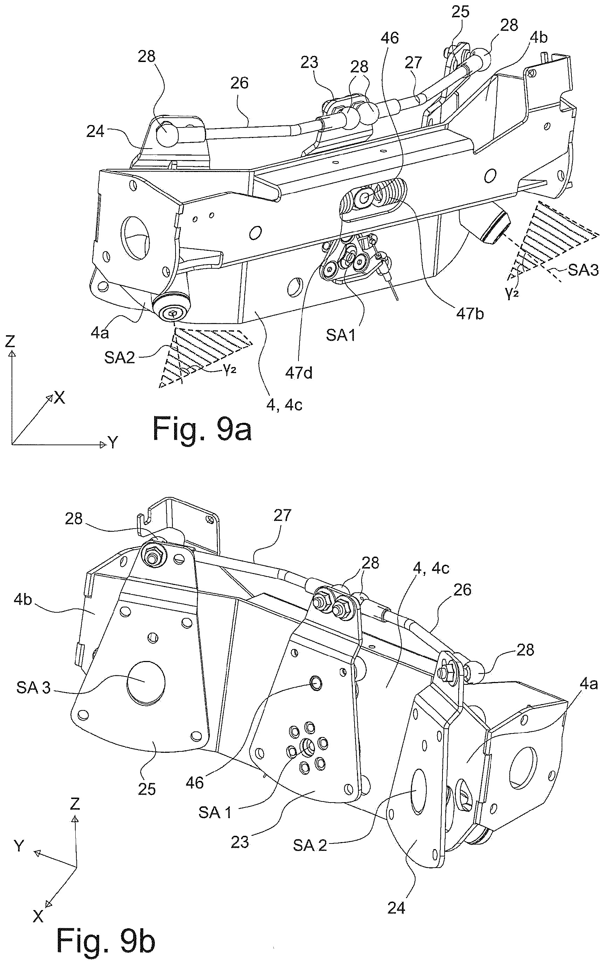

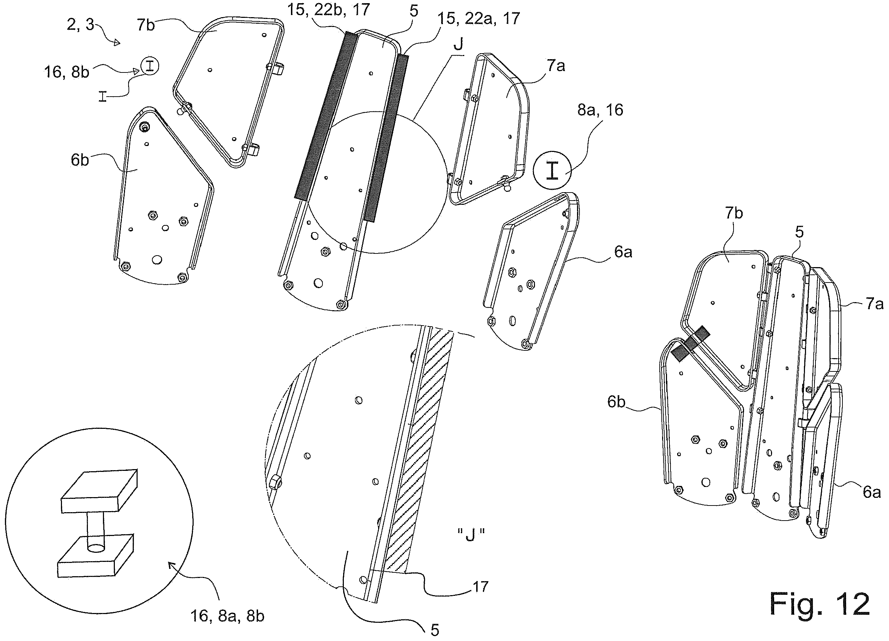

Die Figuren 1 bis 13c zeigen einen Fahrzeugsitz 1 mit einer Rückenlehne 2, welche ein Rückenlehnenteil 3 und ein Rückenlehnenbasiselement 4 umfasst, wobei das Rückenlehnenteil 3 ein mittleres Rückenlehnenelement 5 umfasst, welches verschwenkbar an dem Rückenlehnenbasiselement 4 angeordnet ist, wobei das Rückenlehnenteil 3 zwei untere Rückenlehnenseitenelemente 6a, 6b und zwei obere Rückenlehnenseitenelemente 7a, 7b umfasst, welche jeweils mit dem mittleren Rückenlehnenelement 5 mechanisch gekoppelt sind, wobei die beiden unteren Rückenlehnenseitenelemente 6a, 6b verschwenkbar an dem Rückenlehnenbasiselement 4 angeordnet sind, wobei jeweils zwischen einem unteren Rückenlehnenseitenelement 6a, 6b und einem oberen Rückenlehnenseitenelement 7a, 7b zumindest eine Gelenkeinrichtung 8a, 8b vorgesehen ist, wobei je ein unteres Rückenlehnenseitenelement 6a, 6b und ein oberes Rückenlehnenseitenelement 7a, 7b in einem Winkel α_{L}, α_{R} zueinander angeordnet sind, wobei eine Verschwenkung des mittleren Rückenlehnenelements 5 eine Änderung der Winkel α_{L}, α_{R} bewirkt, wobei die Gelenkeinrichtung (8a, 8b) zumindest ein elastisches Element (16) umfasst. Somit ist jeweils zwischen einem unteren Rückenlehnenseitenelement 6a, 6b und einem oberen Rückenlehnenseitenelement 7a, 7b zumindest eine Gelenkeinrichtung 8a, 8b vorgesehen, wodurch die oberen Rückenlehnenseitenelemente 7a, 7b und die unteren Rückenlehnenseitenelemente 6a, 6b relativ zueinander verschwenkbar sind und die oberen Rückenlehnenseitenelemente 7a, 7b und die unteren Rückenlehnenseitenelemente 6a, 6b jeweils in einem Winkel α_{L}, α_{R} zueinander anordenbar sind.

Die Rückenlehne 2 erstreckt sich entlang einer Höhenachse Z, einer Breitenachse Y und einer Längsachse X. Der Fahrzeugsitz 1 erstreckt sich entlang einer Höhenachse Z' einer Breitenachse Y' und einer Längsachse X'.

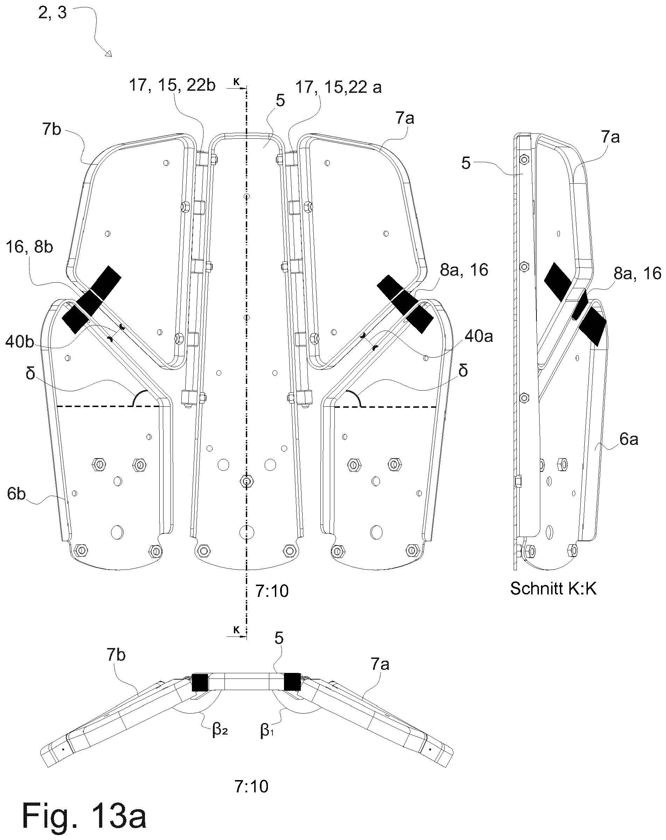

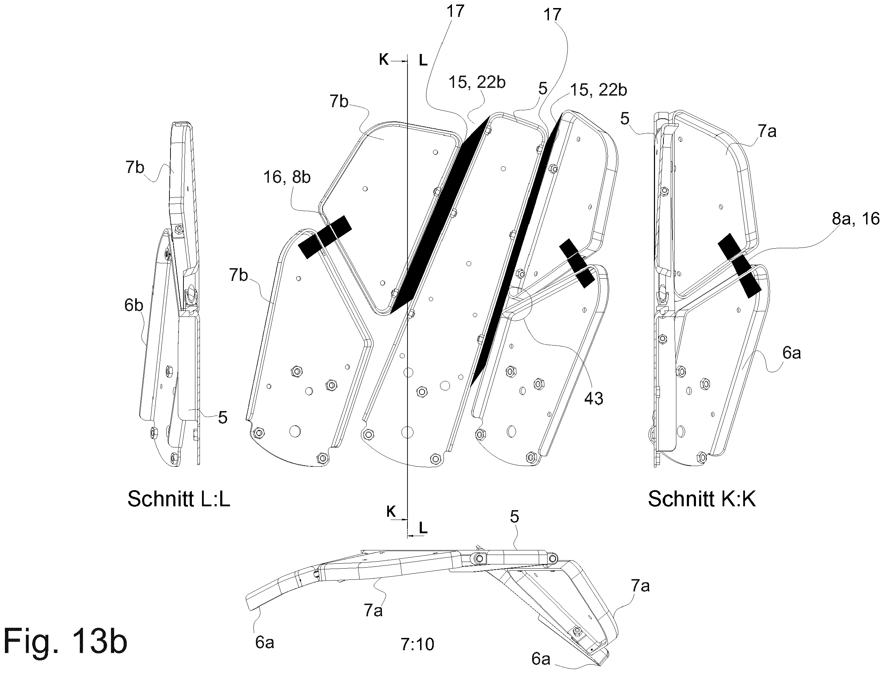

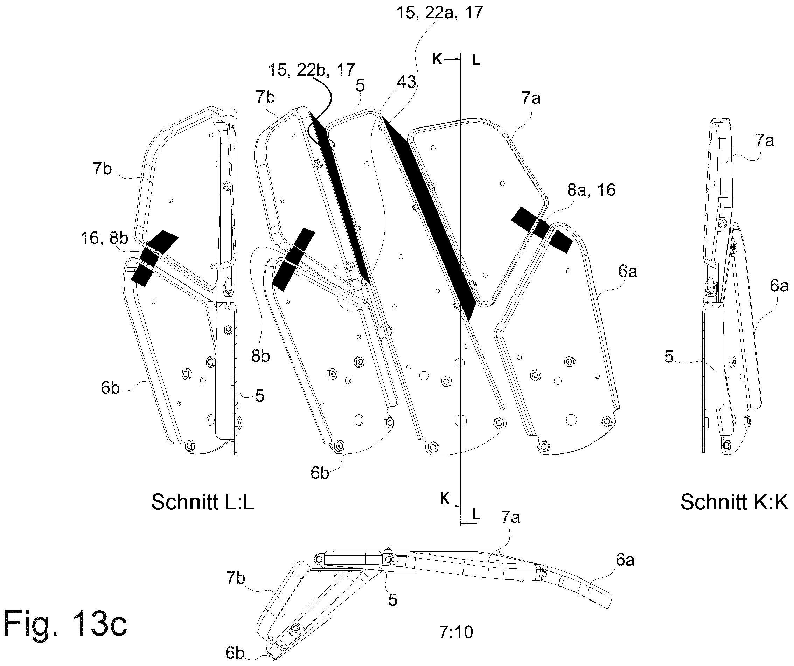

Der Fahrzeugsitz 1 kann somit verschiedene Drehpositionen 10a, 10b, 10c einnehmen. In diesen Drehpositionen 10a, 10b, 10c weisen die Rückenlehnenelemente 5, 6a, 6b, 7a, 7b bestimmte Positionen relativ zueinander ein. Eine erste Drehposition ist die Grundstellung 10c des Fahrzeugsitzes 1. In den Figuren 1a, 2a, 3a, 4a, 5a, 6a, 7a ist der Fahrzeugsitz 1 in der Grundstellung 10c dargestellt. In der Grundstellung 10c des Fahrzeugsitzes 1 oder der Rückenlehne 2 ist der Insasse nach vorne ausgerichtet und das mittlere Rückenlehnenelement 5 erstreckt sich im Wesentlichen entlang der Höhenachse Z und dient somit als Abstützung des Wirbelsäulenbereichs oder eines Teils des Wirbelsäulenbereichs des Insassen. In Figur 13a ist das Rückenlehnenteil 3 beziehungsweise sind die Rückenlehnenelemente 5, 6a, 6b, 7a, 7b in der Grundstellung 10c dargestellt. Dreht sich der Fahrer nach rechts (Blickrichtung rechts), verschwenken Rückenlehnenelemente 5, 6a, 6b, 7a, 7b beziehungsweise das Rückenlehnenteil 3 nach links und dimmt eine zweite Drehposition 10a. In den Figuren 1b, 2b, 3b, 4b, 5b, 6b, 7b ist der Fahrzeugsitz 1 in dieser Drehposition 10a dargestellt. Die Verschwenkung der Rückenlehnenelemente 5, 6a, 6b, 7a, 7b beziehungsweise das Rückenlehnenteil 3 ist dabei um 20° nach links. In Figur 13b ist das Rückenlehnenteil 3 beziehungsweise sind die Rückenlehnenelemente 5, 6a, 6b, 7a, 7b in dieser Drehposition 10a dargestellt. Dreht sich der Fahrer nach links (Blickrichtung links), verschwenken Rückenlehnenelemente 5, 6a, 6b, 7a, 7b beziehungsweise das Rückenlehnenteil 3 nach rechts und nimmt eine dritte Drehposition 10c ein. In den Figuren 1c, 2c, 3c, 4c, 5c, 6c, 7c ist der Fahrzeugsitz 1 in dieser Drehposition 10b dargestellt. Die Verschwenkung Rückenlehnenelemente 5, 6a, 6b, 7a, 7b beziehungsweise das Rückenlehnenteil 3 ist dabei um 20° nach rechts. In Figur 13c ist das Rückenlehnenteil 3 beziehungsweise sind die Rückenlehnenelemente 5, 6a, 6b, 7a, 7b in dieser Drehposition 10b dargestellt. Es sei darauf hingewiesen, dass die Drehpositionen 10a, 10b beispielhafte Positionen sind, die Drehung beziehungsweise Verschwenkung des Rückenlehnenteils 5 kann stufenlos in weitere Drehpositionen erfolgen.

Der Fahrzeugsitz 1 umfasst ein Sitzbasiselement 32, welches plattartig ausgebildet ist und einem weiteren Sitzunterbau oder an einem Fahrzeug angeordnet werden kann. Auf dem Sitzbasiselement 32 kann ein Sitzteil 35, welches ein oder mehrere Polsterelemente umfasst, angeordnet werden. Das Sitzteil 35 kann entlang der Längsachse X' relativ zu dem Sitzbasiselement 32 verlagerbar angeordnet sein. Es kann eine Arretierungseinrichtung und/oder eine Antriebseinrichtung vorgesehen sein, welche diese Verlagerung arretiert und/oder antreibt. Das Sitzbasiselement 32 umfasst entlang der Breitenachse Y' außen angeordnete Trägerelemente 36. Die Trägerelemente 36 sind entlang der Längsachse X' hinten angeordnet. An diesen Trägerelementen 36 ist das Rückenlehnenbasiselement 4 verschwenkbar um eine Neigungsachse NA angeordnet. Auch hier kann eine Arretierungseinrichtung und/oder eine Antriebseinrichtung vorgesehen sein, welche diese Neigung der Rückenlehne 2 beziehungsweise des Rückenlehnenteils 3 arretiert und/oder antreibt.

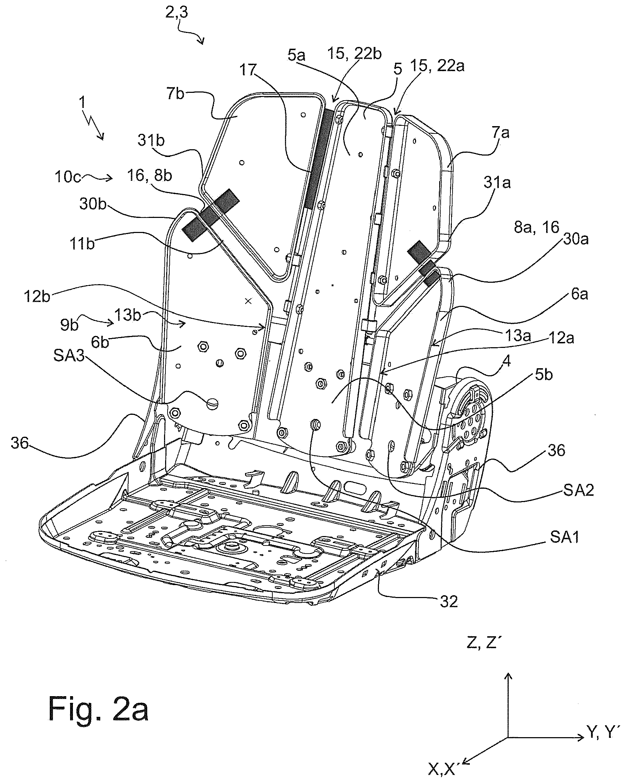

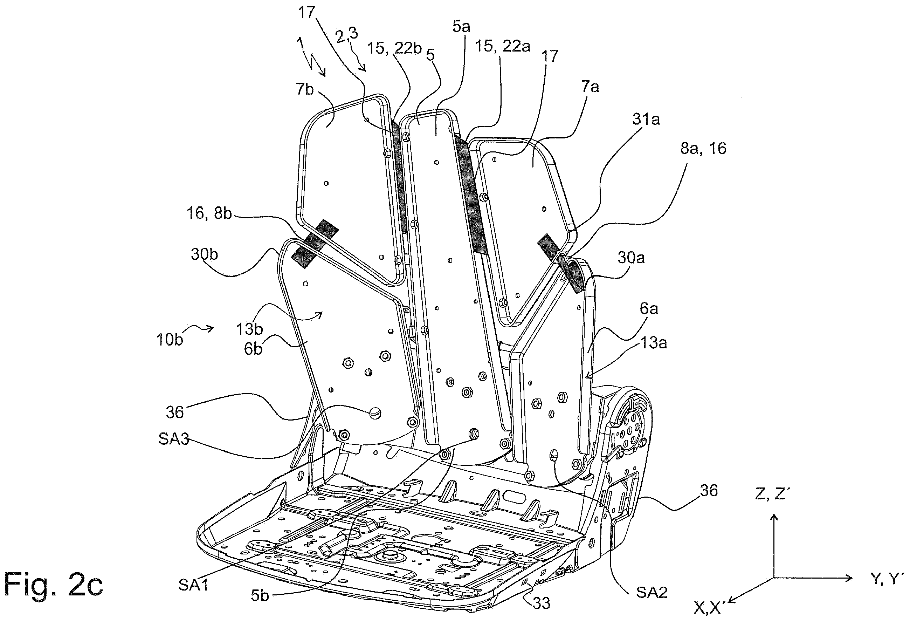

Das Rückenlehnenteil 3 umfasst ein unteres Rückenlehnenseitenelement 6a und ein oberes Rückenlehnenseitenelement 7a, welche linksseitig von dem mittleren Rückenlehnenelement 5 angeordnet sind und somit einen linken Seitenabschnitt 9a des Rückenlehnenteils 3 ausbilden. Ferner umfasst das Rückenlehnenteil 3 ein unteres Rückenlehnenseitenelement 6b und oberes Rückenlehnenseitenelement 7b, welche rechtsseitig von dem mittleren Rückenlehnenelement 3 angeordnet sind und einen rechten Seitenabschnitt 9b des Rückenlehnenteils 3 ausbilden. Die oberen 7a, 7b und die unteren Rückenlehnenseitenelemente 6a, 6b sind dabei als plattenartige Elemente ausgebildet, welche zur Aufnahme von Polsterelementen 29 ausgebildet sind. Die plattenartigen Elemente weisen hierzu eine sich nach vorne erstreckende Umrandung auf. In den Figuren 1a, 1b, 1c, 3a, 3b, 3c, 5a, 5b, 5c, 6a, 6b, 6c, 7a, 7b, 7c sich der Fahrzeugsitz 1 beziehungsweise die Rückenlehne 2 mit solche Polsterelementen 29 abgebildet. In den Figuren 2a, 2b, 2c, 4a, 4b, 4c, 8, 11, 12, 13a, 13b, 13c ist der Fahrzeugsitz 1 beziehungsweise die Rückenlehne 2 ohne Polsterelemente 29. Ebenso ist in diesen Figuren das Sitzteil 35 nicht dargestellt. Die Polsterelemente 29 bilden eine zweigeteilte Auflage/Abstützfläche für den Insassen.

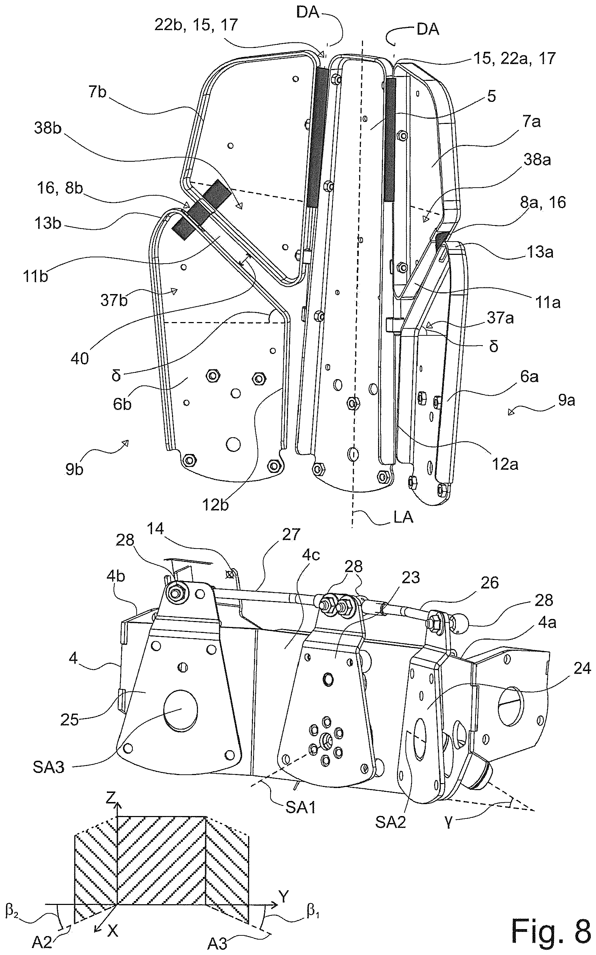

In der Grundstellung 10c der Rückenlehne 2 ist das mittlere Rückenlehnenelement 5 im Wesentlichen in einer ersten Ebene E1 angeordnet, welche durch eine Höhenachse Z der Rückenlehne 2 und eine Breitenachse Y der Rückenlehne 2 aufgespannt ist. Der linke Seitenabschnitt 9a des Rückenlehnenteils 3 ist in der Grundstellung 10c im Wesentlichen in einer zweiten Seitenebene E2 angeordnet, welche durch die Höhenachse Z der Rückenlehne 2 und einer erste Achse A1 aufgespannt ist. Der rechte Seitenabschnitt 10b des Rückenlehnenteils 2 ist weiterhin im Wesentlichen in einer dritten Seitenebene E3 angeordnet, welche durch die Höhenachse Z der Rückenlehne und einer zweiten Achse A2 aufgespannt ist. Die Breitenachse Y und die erste Achse A1 schließen einen ersten Neigungswinkel β, ein und die zweite Achse A2 schließt mit der Breitenachse Y und einen Neigungswinkel β₂ ein. Dies ist in den Figur 1 und 8 dargestellt. Vorzugsweise sind die Neigungswinkel β₁, β₂ in einem Bereich zwischen 5° und 80°, weiter bevorzugt in einem Bereich zwischen 20° und 70°, weiter bevorzugt in einem Bereich zwischen 30° und 50°. Durch die schräg nach vorn ausgerichteten Seitenabschnitte 9a, 9b, wird der Insasse seitlich abgestützt. Dies ist bei einem Wanken des Fahrzeugs besonders vorteilhaft.

In den Figuren 8, 9a, 9b, 10a bis 10f ist das Rückenlehnenbasiselement 4 explizit dargestellt. Dabei ist zu erkennen, dass das Rückenlehnenbasiselement 4 einen mittleren Bereich 4c aufweist, welcher sich im Wesentlichen parallel zu der ersten Ebene E1 erstreckt. Weiterhin weist das Rückenlehnenbasiselement 4 zwei Seitenbereiche 4a, 4b auf. Ein linker Seitenbereich 4a des Rückenlehnenbasiselements 4 erstreckt sich im Wesentlichen parallel zu der zweiten Seitenebene E2 und ein rechter Seitenbereich 4b des Rückenlehnenbasiselements 4 erstreckt sich im Wesentlichen parallel zu der dritten Seitenebene E3. Die unteren Rückenlehnenseitenelemente 6a, 6b sind jeweils um eine zweite Schwenkachse SA2 oder dritte Schwenkachse SA3 verschwenkbar an den Seitenbereichen 4a, 4b des Rückenlehnenbasiselements 4 angeordnet. Das mittlere Rückenlehnenelement 5 ist um eine erste Schwenkachse SA1 verschwenkbar an dem mittleren Bereich 4c des Rückenlehnenbasiselements 4 angeordnet. An den genannten Bereichen 4a, 4b, 4c ist jeweils ein Befestigungselement 25, 26, 23 verschwenkbar angeordnet. An diesen Befestigungselementen 25, 26, 23 sind das mittlere Rückenlehnenelement beziehungsweise die unteren Rückenlehnenseitenelemente 6a, 6b befestigt. In dem mittleren Bereich 4c ist ein Befestigungselement 23 um eine Schwenkachse SA1 verschwenkbar angeordnet. Das zweite Befestigungselement 24 ist mit dem linksseitig angeordneten unteren Rückenlehnenseitenelement 6a fest verbunden und um die zweite Schwenkachse SA2 relativ zu dem Rückenlehnenbasiselement 4 verschwenkbar. Das dritte Befestigungselement 25 ist mit dem rechtsseitig angeordneten unteren Rückenlehnenseitenelement 6b fest verbunden und um die dritte Schwenkachse SA3 relativ zu dem Rückenlehnenbasiselement 4 verschwenkbar.

Die Schwenkachse SA1 ist im Wesentlichen horizontal, d.h. sie erstreckt sich in einer Ebene, welche durch die Breitenachse Y und die Längsachse X aufgespannt wird und/oder ist parallel zu der Längsachse X. Im Gegensatz dazu sind die Schwenkachsen SA2 und SA3 nicht horizontal ausgerichtet, sondern schräg angestellt. Die zweite Schwenkachse SA2 und dritte Schwenkachse SA3 erstrecken sich entlang der Längsachse X und der Höhenachse Z schräg nach oben. Die zweite SA2 und die dritte Schwenkachse SA3 verlaufen demnach ausgehend von einem hinteren Bereich der Rückenlehne 2, welche von Insassen abgewandt ist, zu den beziehungsweise durch den jeweiligen unteren Rückenlehnenseitenelementen 6a, 6b beziehungsweise den jeweiligen Befestigungselementen 24, 25 schräg nach oben. Die zweite und die dritte Schwenkachse SA2, SA3 schließen somit vorzugsweise einen Winkel γ₂, γ₃ mit einer Ebene ein, welche durch die Längsachse X und die Breitenachse Y aufgespannt wird. Vorzugsweise sind diese Winkel γ₂, γ₃ in einem Bereich wischen 10° und 80°, weiter bevorzugt in einem Bereich zwischen 20° und 70°, weiter bevorzugt in einem Bereich zwischen 30° und 60°. Durch die schräg angestellten Schwenkachsen SA2 und SA3 wird bei einer Verschwenkung der unteren Rückenlehnenseitenelemente 6a, 6b ein oberer Randbereich 30a, 30b des unteren Rückenlehnenseitenelements 6a, 6b nach vorne zu dem Insassen hin verlagert.

Es ist ein erster Kopplungsmechanismus 14 vorgesehen, mittels welchem eine mechanische Kopplung des mittleren Rückenlehnenelements 5 mit den beiden unteren Rückenlehnenseitenelementen 6a, 6b erfolgt. Der erste Kopplungsmechanismus ist demnach eine Zwangssteuerung, welche bewirkt, dass eine Schwenkbewegung des mittleren Rückenlehnenelements 5 zu den unteren Rückenlehnenseitenelementen 6a, 6b übertragen wird. Ebenso wird eine Schwenkbewegung eines unteren Rückenlehnenseitenelements 6a, 6b auf das mittlere Rückenlehnenelement 5 und das weiter untere Rückenlehnenseitenelement 6a, 6b übertragen. Durch eine Drehbewegung eines Insassen erfolgt ein Krafteintrag in das Rückenlehnenteil 3. Der Krafteintrag verursacht wiederum eine Verschwenkung des mittleren Rückenlehnenelements 5 und der beiden unteren Rückenlehnenseitenelemente 6a, 6b relativ zum Rückenlehnenbasiselement 4.

Der erste Kopplungsmechanismus umfasst eine erste Koppelstange 26, welche das erste Befestigungselement 23 und das zweite Befestigungselement 24 verbindet. Weiterhin umfasst der erste Kopplungsmechanismus eine zweite Koppelstange 27, welche das erste Befestigungselement 23 und das dritte Befestigungselement 25 verbindet. Die Koppelstangen sind jeweils mittels eines Kugelgelenks 28 an den jeweiligen Befestigungselementen 23, 24, 25 befestigt. Durch schräge Anordnung der unteren Rückenlehnenseitenelemente 6a, 6b relativ zu dem mittleren Rückenlehnenelement 5 beziehungsweise die schräge Anordnung des zweiten 24 und dritten Befestigungselement 25 relativ zu dem ersten Befestigungselement 23 sind die Koppelstangen gewinkelt derart ausgestaltet, dass ein erster Abschnitt der Koppelstange im Wesentlichen parallel zu dem ersten Abschnitt des Rückenlehnenbasiselements 4 verläuft und ein zweiter Abschnitt im Wesentlichen parallel zu dem zweiten Abschnitt des Rückenlehnenbasiselements 4 verläuft. Die Gelenkpfanne der Kugelgelenke ist an dem jeweiligen Ende der Koppelstangen 26, 27 angeordnet. Der jeweilige Kugelkopf ist über einen Kugelzapfen an den Befestigungselementen 23, 24, 25 befestigt.

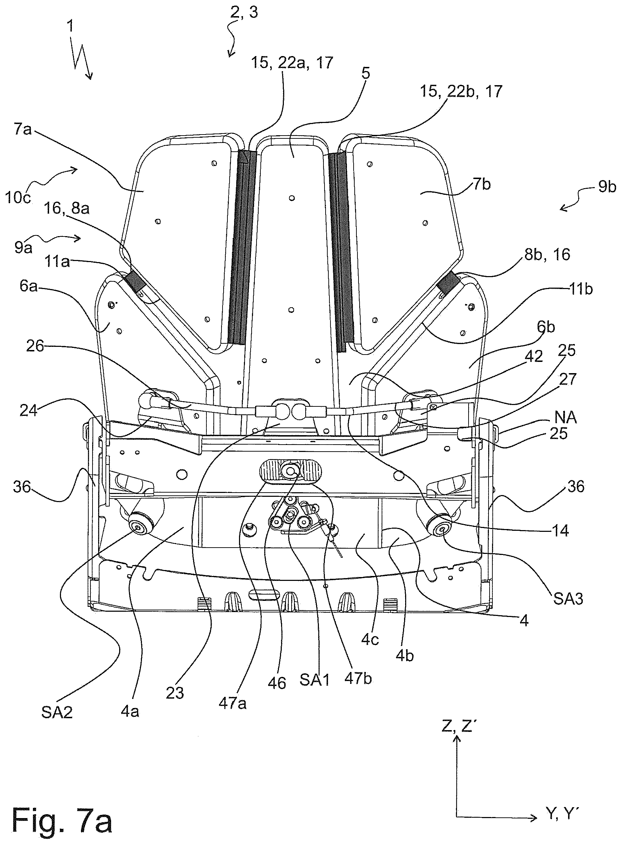

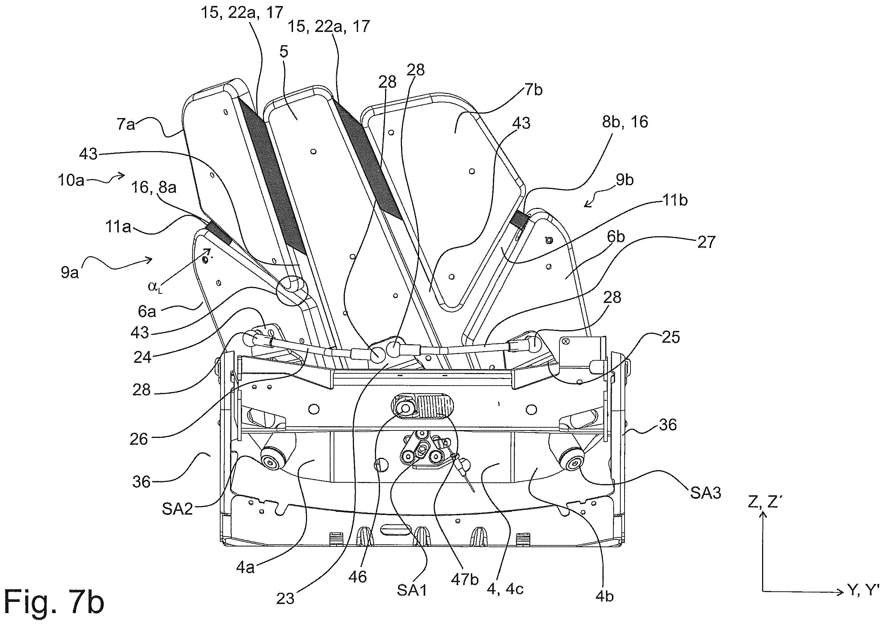

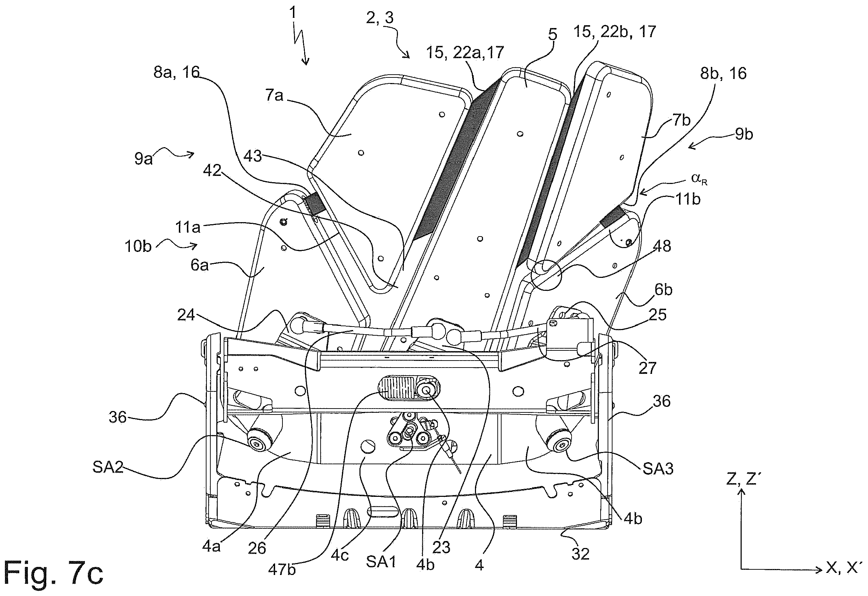

An dem ersten Befestigungselement sind demnach zwei Kugelgelenke 28 angeordnet. In der Grundstellung 10c befinden sich diese beiden Kugelgelenke auf einer Achse im Wesentlichen parallel zu der Breitenachse X. Bei einer Verschwenkung der Rückenlehnenelemente 5, 6a, 6b, 7a, 7b wird ein Kugelgelenk 28 entlang der Höhenachse nach unten und ein Kugelgelenk entlang der Höhenachse Z nach oben verlagert. Der Kugelkopf dreht sich dann entsprechend dieser Bewegung. Beispielsweise wird bei einer Verschwenkung nach links das linke Kugelgelenk 28, welches mit der ersten Koppelstange 26 verbunden ist, nach unten verlagert. Das rechte Kugelgelenk 28, welches mit der zweiten Koppelstange 27 verbunden ist, wird nach oben verlagert. Dies ist in den Figuren 7a, 7b, 7c dargestellt. Die Kugelgelenke 28, welche an dem zweiten 24 und dem dritten Befestigungselement 25 angeordnet sind, übertragen eine Schub- oder Zugbewegung. Durch die schräge Anordnung der unteren Rückenlehnenseitenelemente 6a, 6b relativ zu dem mittleren Rückenlehnenelement 5 beziehungsweise die schräge Anordnung des zweiten 24 und dritten Befestigungselement 25 dreht sich der jeweilige Kugelkopf an den zweiten 24 und dem dritten Befestigungselement 25 nach vorne oder hinten.

Ferner ist ein zweiter Kopplungsmechanismus 15 vorgesehen, mittels welchem eine mechanische Kopplung des mittleren Rückenlehnenelements 5 mit den beiden oberen Rückenlehnenseitenelementen 7a, 7b erfolgt. Der zweite Kopplungsmechanismus 15 umfasst eine linke Kopplungsvorrichtung 22a und eine rechte Kopplungsvorrichtung 22b, mittels welcher das linke obere Rückenlehnenseitenelement 7a, beziehungsweise das rechte Rückenlehnenseitenelement 7b an dem mittleren Rückenlehnenelement 5 angeordnet ist. Die jeweilige Kopplungsvorrichtung 22a, 22b erlaubt eine geführte Translationsbewegung der oberen Rückenlehnenseitenelemente 7a, 7b relativ zu dem mittleren Rückenlehnenelement 5 entlang einer Längsachse LA des mittleren Rückenlehnenelements. Ferner erlauben die Kopplungsvorrichtungen 22a, 22b eine Drehbewegung der oberen Rückenlehnenseitenelemente 7a, 7b relativ zu dem mittleren Rückenlehnenelement 5 um eine Drehachse DA, welche parallel zu der Längsachse LA des mittleren Rückenlehnenelements 5 verläuft.

Die Kopplungsvorrichtung 22a, 22b umfasst zumindest ein zweites elastisches Element 17, welches zwischen einem oberen Rückenlehnenseitenelement und dem mittleren Rückenlehnenelement angeordnet ist. Dieses zumindest eine elastische Element kann vielfältig ausgestaltet sein. Die Kopplungsvorrichtung 22a, 22b umfasst mehrere zweite elastische Elemente 17, welche entlang einer Längserstreckung des oberen Rückenlehnenseitenelements 7a, 7b und/oder des mittleren Rückenlehnenelements 5 angeordnet sind. Die zweiten elastischen Elemente 17 können dabei über die gesamte Längserstreckung des oberen Rückenlehnenseitenelements 7a, 7b und/oder des mittleren Rückenlehnenelements 5 angeordnet sein oder lediglich entlang eines Abschnitts der Längserstreckung des oberen Rückenlehnenseitenelements 7a, 7b und/oder des mittleren Rückenlehnenelements 5 angeordnet sein. Denkbar wäre auch, dass eine Kopplungsvorrichtung 22a, 22b als ein einziges zweites elastisches Element 17 ausgebildet ist. Dieses eine zweite elastische Element 17 kann ebenso bevorzugt über die gesamte Längserstreckung des oberen Rückenlehnenseitenelements 7a, 7b und/oder des mittleren Rückenlehnenelements 5 angeordnet sein oder lediglich entlang eines Abschnitts der Längserstreckung des oberen Rückenlehnenseitenelements 7a, 7b und/oder des mittleren Rückenlehnenelements 5 angeordnet sein

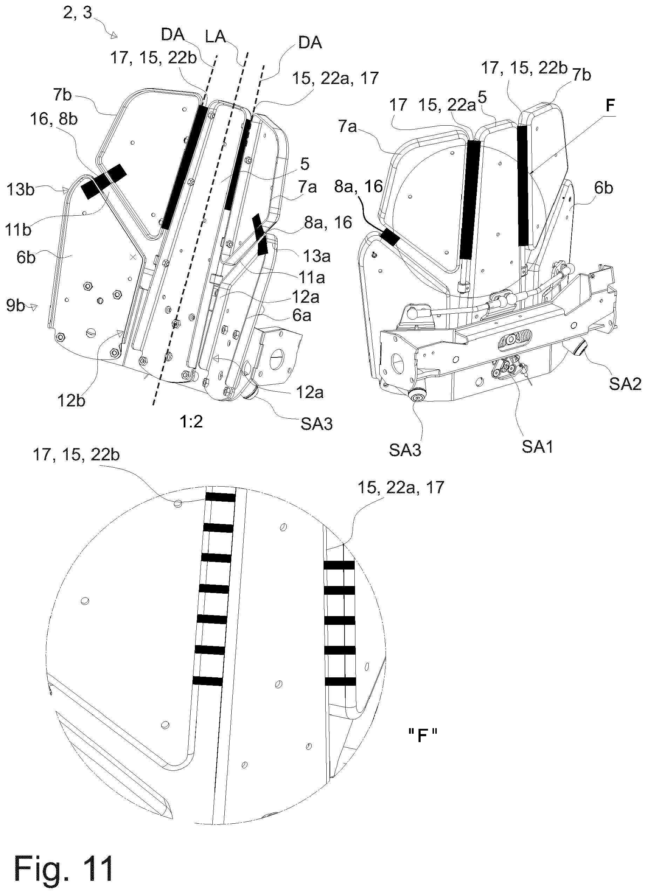

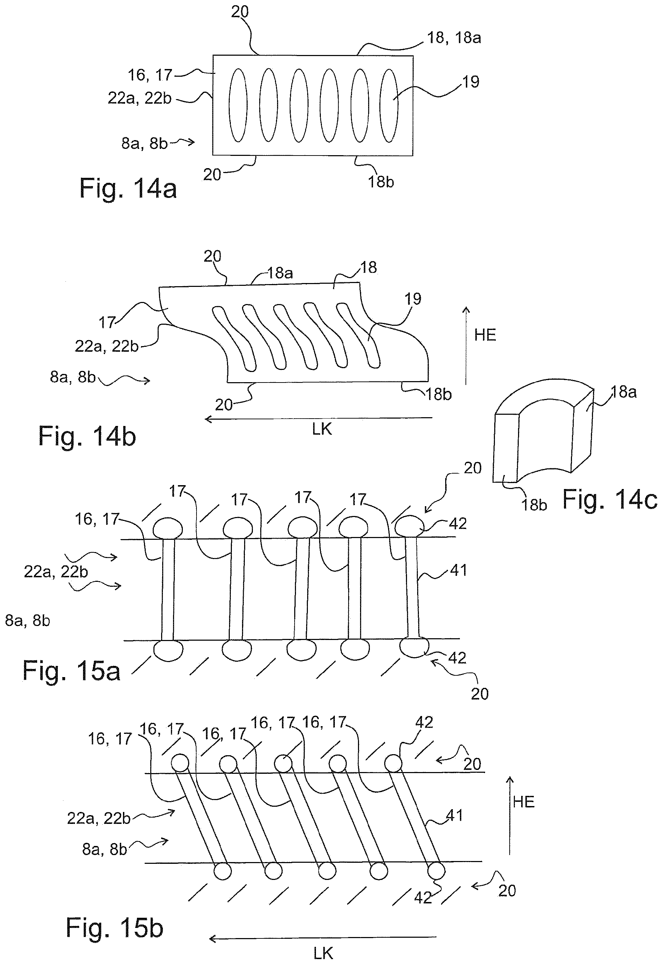

In den Figuren 11, 14a, 14b,14c, 15a, 15b sind mögliche Ausgestaltungen des zweiten elastischen Elements dargestellt. Das erste elastische Element 16 kann ebenso wie in diesen Figuren dargestellt, ausgestaltet sein. Die folgende Beschreibung kann demnach sowohl für das erste 16 als auch das zweite elastische Element 17 gelten. In den Figuren 14a, 14b und 14c ist eine mögliche Ausgestaltung eines elastischen Elements 16, 17 dargestellt. Ein solches elastisches Element 16, 17 weist einen im Wesentlichen Grundkörper 18 auf, welcher beispielsweise rechteckförmig oder quadratisch ausgebildet sein kann und sich entlang einer Längsachse LE und einer Höhenerstreckung HE erstreckt. In diesem Grundkörper 18 befinden sich Ausnehmungen 19. In Figur 14a ist das elastische Element 16, 17 in einem Ursprungszustand dargestellt. Die Ausnehmungen verlaufen dabei im Wesentlichen parallel zu einer Außenkante und sind im Wesentlichen entlang der Höhenerstreckung HE ausgerichtet. In Figur 14b ist ein verformter Zustand des elastischen Elements 16, 17 dargestellt. Das elastische Element 16, 17 erfährt eine Verformung in Form einer Scherung, da eine obere Seite 18a relativ zu einer unteren Seite 18b entlang der Längsachse LK verlagert wird. Ferner kann das elastische Element um eine Drehachse, welche parallel zu der Längsachse LK verläuft, verdreht, d.h. die obere Seite 18a wird um die Drehachse relativ zu der unteren Seite 18c verdreht, wie beispielhaft in Figur 14c skizziert. Dies erfolgt im Falle der Kopplungsvorrichtungen 22a, 22b. Bei einem zweiten elastischen Element 17 würde eine solche Verformung in Form einer Scherung und einer Verdrehung durch die Relativbewegung eines oberen Rückenlehnenseitenelements 7a, 7b relativ zu dem mittleren Rückenlehnenelement verursacht. Das erste elastische Element erfährt eine Verdrehung um eine Achse parallel zu der Höhenerstreckung HE. Bei einem ersten elastischen Element 16 würde eine solche Verformung in Form einer Scherung und einer entsprechenden Verdrehung durch die Relativbewegung eines oberen Rückenlehnenseitenelements 7a, 7b relativ zu einem unteren Rückenlehnenseitenelement verursacht. Die obere und untere Seite könnten dabei jeweils an einem Befestigungselement 20 angeordnet sein, welches vorzugsweise aus einem formstabilen Kunststoff besteht. Die Befestigung an den Rückenlehnenelementen 5, 6a, 6b, 7a, 7b kann vorzugsweise mittels dieser Befestigungselemente 20 erfolgen.

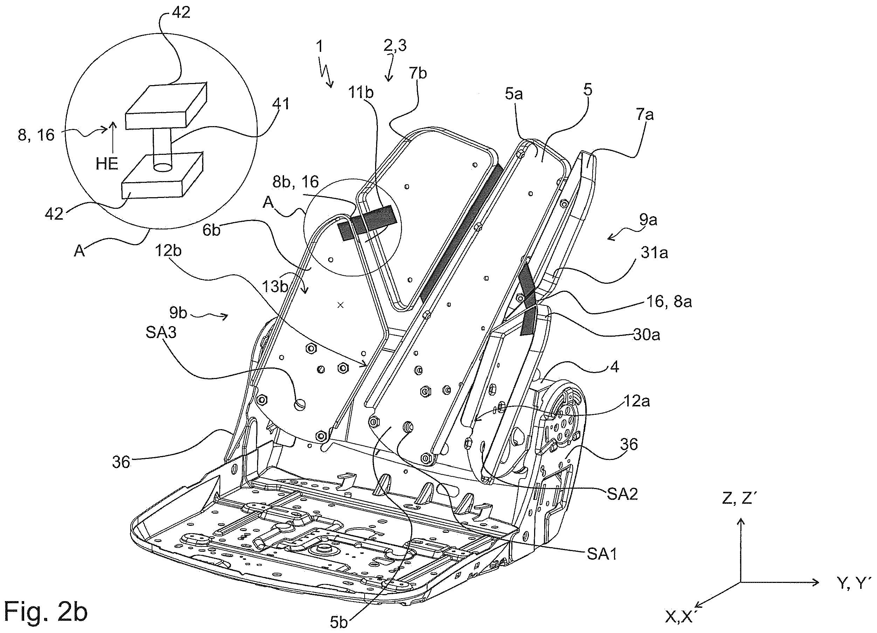

In den Figuren 15a und 15b ist eine weitere mögliche Ausgestaltung der Kopplungsvorrichtung 22a, 22b und/oder der Gelenkeinrichtung 8a, 8b dargestellt. Die Kopplungsvorrichtung 22a, 22b beziehungsweise die Gelenkeinrichtung 8a, 8b umfassen eine Mehrzahl an elastischen Elementen 16, 17, welche an den entsprechenden Rückenlehnenelementen 5, 6a, 6b, 7a, 7b befestigt sind. Die elastischen Elemente 16, 17 weisen einen länglichen Abschnitt 41 auf, und an dessen Enden Fixierabschnitte 42 vorgesehen sind. Der längliche Abschnitt 41 und die Fixierabschnitte 42 können einen kreisförmigen Querschnitt, einen quadratischen oder einen anderweitig ausgebildeten Querschnitt aufweisen. Die Fixierabschnitte 42 weisen dabei eine größere Ausdehnung in der Breite und Tiefe beziehungsweise einen größeren Durchmesser auf als der längliche Abschnitt 41. Mit anderen Worten sind die elastischen Elemente 16, 17 knochenförmig ausgebildet. Ein solches elastisches Element ist beispielsweise auch in Figur 2b dargestellt. In Figur 15a ist das elastische Element 16, 17 in einem Ursprungszustand dargestellt. Der längliche Abschnitt 41 verläuft dabei im Wesentlichen parallel zur Höhenerstreckung HE ausgerichtet. In Figur 15b ist ein verformter Zustand der elastischen Elemente 16, 17 dargestellt. Die elastischen Elemente 16, 17 erfahren eine Verformung in Form einer Dehnung, da die Befestigungskanten analog zu der Figur 15b eine Scherung entlang der Längsachse LK durchführen. Ferner erfahren die elastischen Elemente Verdrehbewegungen wie hinsichtlich der Figuren 15b, 15c beschrieben. Die Fixierabschnitte 42 können direkt an dem jeweiligen Rückenlehnenelementen 5, 6a, 6b, 7a, 7b oder an einem Befestigungselement 20, welches wiederum an den jeweiligen Rückenlehnenelementen 5, 6a, 6b, 7a, 7b angebracht ist, befestigt sein.

Denkbar wäre auch, dass an den oberen 7a, 7b und den unteren Rückenlehnenseitenelementen 6a, 6b zumindest eine Hinterschneidung, bevorzugt mehrere Hinterschneidungen vorgesehen sind und das erste elastische Element 16 direkt an diese Rückenlehnenelemente 6a, 6b, 7a, 7b angespritzt ist. Ebenso wäre es auch denkbar, dass an den oberen 7a, 7b Rückenlehnenseitenelementen und dem mittleren Rückenlehnenelement 5 zumindest eine Hinterschneidung, bevorzugt mehrere Hinterschneidungen vorgesehen sind und das zweite elastische Element 17 direkt an diese Rückenlehnenelemente 6a, 6b, 7a, 7b angespritzt ist. Durch das vorteilhafte Vorsehen der Hinterschneidungen kann eine ausreichende mechanische Belastbarkeit dieser Verbindung gewährleistet werden.

Bei einer beispielhaften Verlagerung nach links in die zweite Drehposition 10a wird demnach das linke obere Rückenlehnenseitenelement 7a entlang der Langsachse LA des mittleren Rückenlehnenelements 5 nach oben verlagert. Das linke obere Rückenlehnenseitenelement 7a ragt demnach über das Ende der Längserstreckung des mittleren Rückenlehnenelements 5 hinaus. Gleichzeitig dreht sich das linke obere Rückenlehnenseitenelement 7a um die Drehachse DA, so dass dieses nach vorne zu dem Insassen hingedreht wird. Das rechte obere Rückenlehnenseitenelement 7b wird entlang der Langsachse LA des mittleren Rückenlehnenelements 5 nach unten verlagert. Das rechte obere Rückenlehnenseitenelement 7b taucht demnach unter das Ende der Längserstreckung des mittleren Rückenlehnenelements 5. Gleichzeitig dreht sich das rechte obere Rückenlehnenseitenelement 7b um die Drehachse DA, so dass dieses nach vorne zu dem Insassen hingedreht wird. Eine solche beispielhafte zweite Drehposition 10a ist in den Figuren 1b, 2b, 3b, 4b, 5b, 6b, 7b, 13b dargestellt. Eine Verlagerung nach rechts kann analog beschrieben werden und ist in den Figuren 1c, 2c, 3c, 4c, 5c, 6c, 7c, 13c dargestellt.

Die oberen 7a, 7b und die unteren Rückenlehnenseitenelemente 6a, 6b sind entlang der Höhenachse Z voneinander derart beabstandet, dass ein Schlitz 11a, 11b zwischen diesen beiden Elementen 6a, 6b, 7a, 7b sich ausbildet. Dieser Schlitz 11a , 11b verläuft ausgehend von einem inneren Bereich 12a, 12b eines Seitenabschnitts 9a, 9b entlang der Höhenachse Z schräg noch oben zu einem äußeren Bereich 13a 13b eines Seitenabschnitts 9a, 9b des Rückenlehnenteils 3. Die beiden Schlitze 11a, 11b verlaufen somit V-förmig zu dem mittleren Rückenlehnenelement 5 hin. Der Schlitz 11a, 11b schließt mit einer horizontalen Achse 39 einen Winkel δ ein. Die horizontale Achse 39 liegt in einer Ebene, welche durch die Breitenachse Y und die Längsachs X aufgespannt wird. Der Winkel δ ist bevorzugt in einem Bereich zwischen 20° und 70°, bevorzugt in einem Bereich zwischen 30° und 60°, weiter bevorzugt in einem Bereich zwischen 40° und 50°. Dies ist beispielsweise in den Figuren 8 und 13a dargestellt. Die oberen 7a, 7b und die unteren Rückenlehnenseitenelemente 6a, 6b weisen eine dementsprechende Form auf. So hat ein oberer Bereich 37a, 37b der unteren Rückenlehnenseitenelemente 6a, 6b im Wesentlichen die Form eines unregelmäßigen rechtwinkligen Dreieckes. Die Hypotenuse dieses Dreiecks bildet die dem Schlitz 11a, 11b zugewandte obere Berandung der unteren Rückenlehnenseitenelemente 6a, 6b. Ebenso hat ein unterer Bereich 38a, 38b der oberen Rückenlehnenseitenelemente 7a, 7b im Wesentlichen die Form eines unregelmäßigen rechtwinkligen Dreieckes. Die Hypotenuse dieses Dreiecks bildet die dem Schlitz zugewandte untere Berandung der oberen Rückenlehnenseitenelemente 7a, 7b. In der Grundstellung ist ein Abstand 40a, 40b zwischen den oberen 7a, 7b und den unteren Rückenlehnenseitenelemente 6a, 6b beziehungsweise die Schlitzbreite entlang der gesamten Länge des Schlitzes 11a , 11b konstant.

In den äußeren Bereichen 13a, 13b des linken Seitenabschnitts 9a und des rechten Seitenabschnitts 9b des Rückenlehnenteils 3 ist jeweils eine Gelenkeinrichtung 8a, 8b vorgesehen, welche zumindest abschnittsweise in dem jeweiligen Schlitz 11a, 11b angeordnet ist. Die jeweilige Gelenkeinrichtung 8a, 8b umfasst zumindest ein erstes elastisches Element 16, welches an einem der unteren Rückenlehnenseitenelemente und an einem oberen Rückenlehnenseitenelement direkt oder indirekt befestigt ist. Das zumindest eine erste elastische Element weist eine Höhenerstreckung HE auf, welche im Wesentlichen der Abstand 40a, 40b beziehungsweise die Schlitzbreite ist. Das zumindest eine elastische Element 16 kann vielfältig ausgestaltet sein, beispielsweise können die in den Figuren 14a, 1b, 15a, 15b dargestellten elastischen Elemente 16 in Betracht kommen. In Figur 2b ist eine Ausführungsform dargestellt, in welcher ein erstes elastisches Element 16 vorgesehen ist. Dieses erste elastische Element 16 weist einen länglichen Abschnitt 41 auf, an dessen Enden Fixierabschnitte 42 vorgesehen sind. Der längliche Abschnitt 41 und die Fixierabschnitte 42 können einen kreisförmigen Querschnitt, einen quadratischen oder einen anderweitig ausgebildeten Querschnitt aufweisen. Die Fixierabschnitte 42 weisen dabei eine größere Ausdehnung in der Breite und Tiefe beziehungsweise einen größeren Durchmesser auf als der längliche Abschnitt 41. Dieses erste elastische Element 16 ist demnach knochenförmig ausgestaltet. Die Fixierabschnitte 42 sind entweder an einem Befestigungselement 20 angeordnet oder direkt an den oberen 7a, 7b und unteren Rückenlehnenseitenelementen 6a, 6b.

Bei einer Bewegung der Rückenlehnenseitenelemente 7a, 7b relativ zueinander wird das zumindest eine erste elastische Element 16 um seine Höhenerstreckung HE verdreht und wird weiterhin expandiert oder komprimiert. Diese Expansion beziehungsweise Dehnung erfolgt im Wesentlichen entlang der Längserstreckung des Schlitzes 11a, 11b. Die Gelenkeinrichtung 8a, 8b kann vorteilhafterweise auch mehrere erste elastische Elemente 16 umfassen, welche entlang einer Längserstreckung des Schlitzes 11a, 11b angeordnet sind. Die ersten elastischen Elemente 16 können dabei bevorzugt über die gesamte Längserstreckung des Schlitzes 11a, 11b oder lediglich entlang eines Abschnitts der Längserstreckung des Schlitzes 11a, 11b angeordnet sein.

Bei einer Verschwenkung des mittleren Rückenlehnenelements 5 verändert sich aufgrund der mechanischen Kopplungen und einer Auslenkung der Gelenkeinrichtung 8a, 8b der Abstand 50a, 40b zwischen einem unteren Rückenlehnenseitenelement (6a, 6b) und einem oberen Rückenlehnenseitenelement 7a, 7b zumindest in dem inneren Bereich 12a, 12b eines Seitenabschnitts 9a, 9b des Rückenlehnenteils 3.

Eine Drehbewegung eines Insassen bewirkt einen Krafteintrag in das Rückenlehnenteil 2. Dieser Krafteintrag wirkt, abhängig von der Sitzhaltung des Insassen auf eines, mehrere oder alle der zumindest fünf Rückenlehnenelemente 5, 6a, 6b, 7a, 7b. Durch die mechanischen Kopplungen der oberen 7a, 7b und unteren Rückenlehnenseitenelemente 6a, 6b mit dem mittleren Rückenlehnenelement 5 wird der Krafteintrag auf alle Rückenlehnenelemente 5, 6a, 6b, 7a, 7b übertragen. Der durch die Drehbewegung verursachte Krafteintrag bewirkt eine Verschwenkung des mittleren Rückenlehnenelements 5 und eine Verschwenkung der beiden unteren Rückenlehnenseitenelemente 6a, 6b relativ zum Rückenlehnenbasiselement 4. Das mittlere Rückenlehnenelement 5 wird in Richtungen parallel zu der Breitenachse Y verschwenkt. Dreht sich der Insasse nach rechts, um über seine rechte Schulter zu blicken, wird eine Verschwenkung des mittleren Rückenlehnenelements 5 nach links bewirkt. Ein entsprechender Krafteintrag kann beispielsweise über eine Schubbewegung der Schulter des Insassen an einen Seitenabschnitt 9a, 9b erfolgen. Eine Verschwenkung des mittleren Rückenlehnenelements 5 bewirkt durch die Zwangssteuerung des ersten Kopplungsmechanismus 15 eine Verschwenkung der unteren Rückenlehnenseitenelemente 6a, 6b um die Schwenkachsen SA2, SA3. Ferner bewirkt die Verschwenkung des mittleren Rückenlehnenelements 5 eine Translation der oberen Rückenlehnenseitenelemente 7a, 7b entlang der Längsachse LA des mittleren Rückenlehnenelements 5 und gleichzeitig eine Drehung der oberen Rückenlehnenseitenelemente 7a, 7b um die Drehachsen DA. Durch diese Bewegungen und eine entsprechende Auslenkung der Gelenkeinrichtung 8a, 8b treten ein oberer Randbereich 30a, 30b des unteren Rückenlehnenseitenelements 6a, 6b und ein unterer Randbereich 31a, 31b des oberen Rückenlehnenseitenelements 7a, 7b aus der zweiten Ebene E2 beziehungsweise der dritten Ebene E3 heraus. Ein oberer Randbereich 30a, 30b des unteren Rückenlehnenseitenelements 6a, 6b und ein unterer Randbereich 31a, 31b des oberen Rückenlehnenseitenelements 7a, 7b tritt aus der jeweiligen Ebene in Richtung zu dem Insassen hin, wenn die Verschwenkung in die Richtung zu diesem Rückenlehnenseitenelement 6a, 6b, 7a, 7b erfolgt. Ein oberer Randbereich 30a, 30b des unteren Rückenlehnenseitenelements 6a, 6b und ein unterer Randbereich 31a, 31b des oberen Rückenlehnenseitenelements 7a, 7b tritt aus der jeweiligen Ebene in Richtung von dem Insassen weg, wenn die Verschwenkung entgegen die Richtung zu diesem Rückenlehnenseitenelement 6a, 6b, 7a, 7b erfolgt. Bei einer Verschwenkung des mittleren Rückenlehnenelements 5 zu einem Seitenabschnitt 9a, 9b des Rückenlehnenteils 3 hin ist der Winkel α_{L}, α_{R} somit ein stumpfer Winkel, d.h. ein Winkel größer als 90° und kleiner als 180°, wobei die Winkel α_{L}, α_{R} in der Grundstellung im Wesentlichen 180° ist. Bei einer Verschwenkung des mittleren Rückenlehnenelements 5 von einem Seitenabschnitt 9a, 9b des Rückenlehnenteils 3 weg ist der Winkel α_{L}, α_{R} somit ein überstumpfer Winkel, d.h. ein Winkel größer als 180°. Die Winkel α_{L}, α_{R} werden vorteilhafterweise von den Flächen der Rückenlehnenseitenelemente 6a, 6b, 7a, 7b beziehungsweise der plattenartigen Elementen der Rückenlehnenseitenelemente 6a, 6b, 7a, 7b eingeschlossen.

Durch das Hervortreten der Rückenlehnenseitenelemente 6a, 6b, 7a, 7b wird eine Art Auswölbung Auflage/Abstützfläche für den Insassen, welche durch die Polsterelemente 29 oder die Rückenlehnenseitenelemente 6a, 6b, 7a, 7b selbst ausgebildet wird, gebildet. Bei einer Verschwenkung nach links wird beispielsweise der Winkel α_{L}, ein stumpfer Winkel und der Winkel α_{R}, ein überstumpfer Winkel ausgebildet. Somit treten die linken oberen und unteren Rückenlehnenseitenelement 6a, 7a hervor und bilden eine Art Auswölbung. Eine derartige Auswölbung unterstützt die eingeknickte Haltung des Oberkörpers in einer sitzenden Drehposition. Der Fahrzeugsitz 1 bietet somit eine ergonomisch optimale Anpassung des Rückenlehnenteils 3 an eine Drehbewegung eines Insassen. Ferner kann eine derartige Verschwenkung beziehungsweise Drehung des Rückenlehnenteils auch zur Isolation von Querbeschleunigungen (Wanken) dienen.

Durch die beschriebenen Bewegungen der oberen und unteren Rückenlehnenseitenelemente 6a, 6b, 7a, 7b erfolgt eine Auslenkung der Gelenkeinrichtungen 8a, 8b entlang mehrerer Freiheitsgrade insbesondere eine Verdrehung und eine Dehnung oder Komprimierung des zumindest einen elastischen Elements 16. Bei einer Verschwenkung des mittleren Rückenlehnenelements 5 verändert sich somit aufgrund der mechanischen Kopplungen und einer Auslenkung der Gelenkeinrichtung 8a, 8b der Abstand 40a, 40b zwischen einem unteren Rückenlehnenseitenelement 6a, 6b und einem oberen Rückenlehnenseitenelement 7a, 7b, beziehungsweise die Schlitzbreite zumindest in dem inneren Bereich 12a, 12b eines Seitenabschnitts 9a, 9b des Rückenlehnenteils 3. In den Figuren 7b, 7c 13b, 13c ist beispielsweise gut erkennbar, dass die dem Schlitz 11a, 11b zugewandte obere Berandung der unteren Rückenlehnenseitenelemente 6a, 6b und die dem Schlitz zugewandte untere Berandung der oberen Rückenlehnenseitenelemente 7a, 7b in dem inneren Bereich 12a, 12b eines Seitenabschnitts abschnittsweise aneinander anliegen. Diese Bereiche sind mit einem Kreis 43 in der jeweiligen Figur gekennzeichnet.

Nach einer weiteren Ausführungsform ist das mittlere Rückenlehnenelement 5 zweiteilig ausgestaltet. Das mittlere Rückenlehnenelement 5 umfasst demnach einen oberen Abschnitt 5a und einen unteren Abschnitt 5b. Die beiden Abschnitte 5a, 5b des mittleren Rückenlehnenelements 5 sind durch eine weitere Gelenkeinrichtung 44 miteinander verbunden. Die weitere Gelenkeinrichtung 44 beziehungsweise die Aufteilung des mittleren Rückenlehnenelements 5 ist in einem unteren Bereich des mittleren Rückenlehnenelements 5 angeordnet. Vorteilhafterweise ist die weitere Gelenkeinrichtung 44 in oder über dem Lendenwirbelbereich des Insassen angeordnet. Somit kann durch eine Verschwenkung des oberen Abschnitts 5a relativ zu dem unteren Abschnitt 5b ein Haltungsausgleich beziehungsweise eine Lordose/Kyphose des Insassen ausgeglichen werden. Vorteilhafterweise ist die Neigung des oberen Abschnitts 5a des mittleren Rückenlehnenelements 5 durch einen Stellantrieb, beispielsweise ein Elektromotor, hydraulisch, pneumatisch oder aber auch händisch einstellbar.

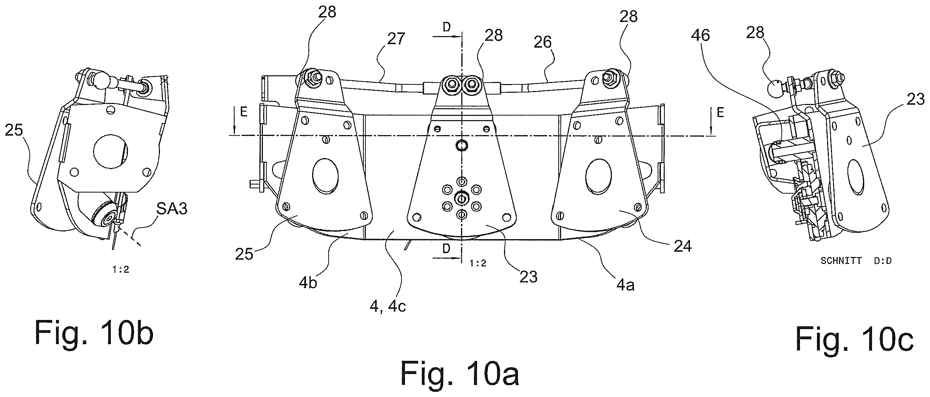

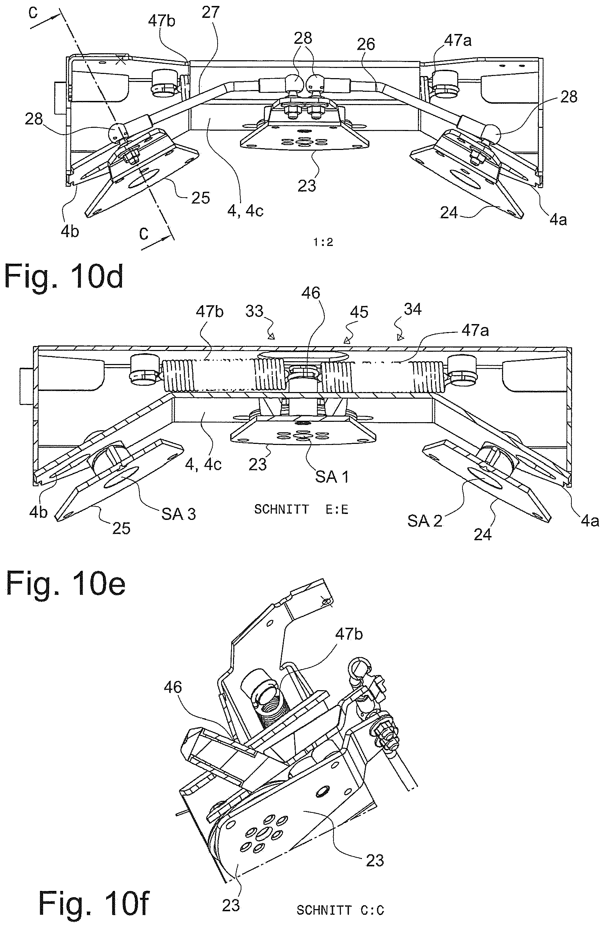

Nach einer weiteren Ausführungsform ist eine Arretierungseinrichtung 33 vorgesehen, mittels welcher eine Drehposition 10a, 10b, 10c des Rückenlehnenteils 3 arretierbar ist. Weiterhin wäre es denkbar, dass eine Rückstelleinrichtung vorgesehen ist, welche das Rückenlehnenteils 3 in seine Grundstellung 10c rückführt. An dem ersten Befestigungselement 23 ist ein Zapfen 46 vorgesehen, welcher sich entlang der Längsachse X in das Rückenlehnenbasiselement 4 erstreckt. Innerhalb des Rückenlehnenbasiselements 4 ist ein Federnpaar 47a, 47b vorgesehen. Der Zapfen 46 ist zwischen den Federn 47a, 47b des Federnpaars angeordnet und mit diesen wirkverbunden beziehungsweise an einem Ende jeweils einer Feder 47a, 47b befestigt. Das weitere Ende der Federn ist mit dem Rückenlehnenbasiselement 4 verbunden. Dies ist in der Figur 10e ersichtlich. Durch eine Verschwenkung des ersten Befestigungselements 23 wird der Zapfen 46 entlang der Breitenachse Y verlagert. Es wird somit eine der Federn 47a, 47b komprimiert und eine weitere Feder 47a, 47b expandiert. Die entsprechenden Federkräfte können eine Rückführung des Rückenlehnenteils 3 in die Grundstellung 10c bewirken. Durch die Arretierungseinrichtung 33 kann die Verlagerung des Zapfens 46 arretiert werden, wodurch die Verschwenkung des ersten Befestigungselements 23 arretierbar ist. Durch die mechanischen Kopplungen ist hierdurch die Verschwenkung des gesamten Rückenlehnenteils 3 arretierbar.

Nach einer weiteren Ausführungsform ist eine Antriebseinrichtung 34 vorgesehen, mittels welcher das Rückenlehnenteil 3 in eine Drehposition 10a, 10b, 10c bringbar ist. Die Antriebseinrichtung 34 könnte beispielsweise die Verlagerung des Zapfens 46 entlang der Breitenachse Y antreiben und somit die Verschwenkung des ersten Befestigungselements 23 beziehungsweise des gesamten Rückenlehnenteils 3. Die Antriebseinrichtung 34 kann beispielsweise ein elektrischer Stellantrieb, ein pneumatischer, ein hydraulischer oder ein anderweitiger Antrieb sein.

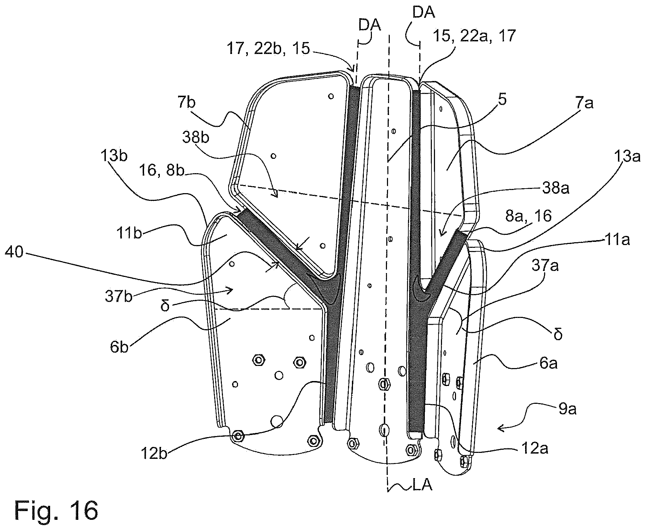

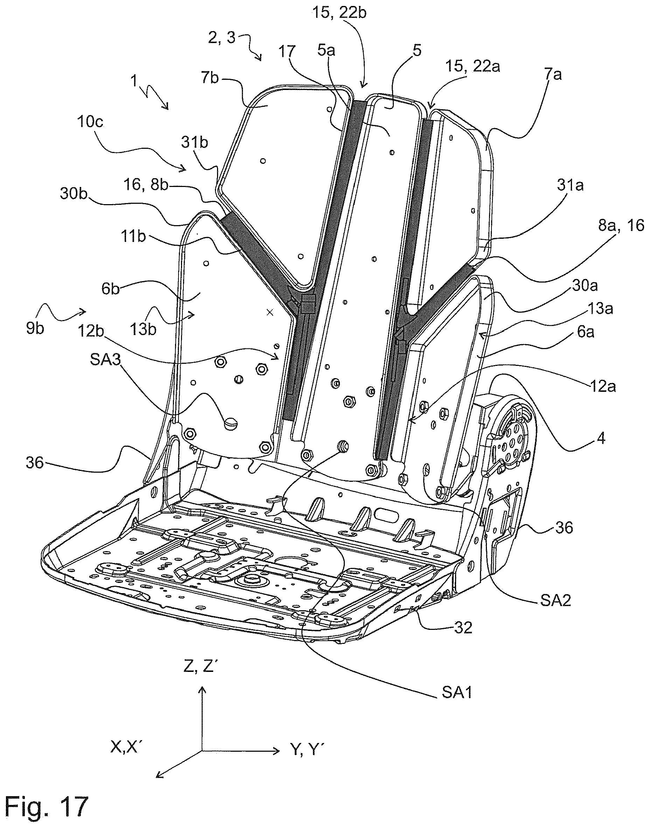

In den Figuren 16 und 17 ist eine weitere mögliche Ausführungsform dargestellt, in welcher ein drittes elastisches Element 49 vorgesehen ist. Das dritte elastische Element 49 umfasst die beiden ersten elastischen Elemente 16, die beiden zweiten elastischen Elemente 17 und verbindet weiterhin die unteren Rückenlehnenseitenelemente 6a 6b und das mittlere Rückenlehnenelement 5. Das dritte elastische Element 49 ist somit zwischen jeweils einem oberen 7a 7b und einem unteren Rückenlehnenseitenelement 6a, 6b zwischen jeweils einem oberen Rückenlehnenseitenelement 7a, 7b und dem mittleren Rückenlehnenseitenelement 5 und zwischen jeweils einem unteren Rückenlehnenseitenelement 6a, 6b und dem mittleren Rückenlehnenseitenelement 5 angeordnet. Das dritte elastische Element ist somit ein enteiliges oder einstückiges Element, welches durchgehend zwischen den zumindest fünf Rückenlehnenlementen 5, 6a, 6b, 7a, 7b sich erstreckt, insbesondere auch in dem Zwischenraum 50, in welchem die Schlitze 11a, 11b in einem Zwischenzaum 51 münden, welcher sich zunächst zwischen dem mittleren Rückenlehnenseitenelement 5 und den unteren Rückenlehnenseitenelementen 6a, 6b und dann entlang der Höhenachse Z nach oben zwischen dem mittleren Rückenlehnenseitenelement 5 und den oberen Rückenlehnenseitenelementen 7a, 7b. Der jeweilige Abstand zwischen den Rückenlehnenelementen 5, 6a, 6b, 7a, 7b ist zumindest teilweise oder im Wesentlichen vollständig durch das dritte elastische Element 49 ausgefüllt. Das dritte elastische Element 49 kann gemäß den Ausführungsformen gezeigt in den Figuren 14a, 14b, 15a, 15c ausgestaltet sein. Es kann jedoch auch als ein durchgehender eingespritzter elastischer Kunststoff ausgestaltet sein. Vorteilhafterweise ist eine Dicke des dritten elastischen Elements 49 in den Abschnitten der ersten 16 und zweiten elastischen Elemente17, also zwischen den oberen 7a, 7b und den unteren Rückenlehnenseitenelementen 6a, 6b und zwischen den oberen Rückenlehnenseitenelementen 7a, 7b und dem mittleren Rückenlehnenseitenelement 5 größer als in den Abschnitten des dritten elastischen Elementes 49, welche sich zwischen den unteren Rückenlehnenseitenelementen 6a, 6b und dem mittleren Rückenlehnenseitenelement 5 befinden. Dies ist vorteilhaft, da in den Bereichen der ersten 16 und zweiten elastischen Elemente 17 größere Kräfte auf das dritte elastische Element 49 wirken. Vorteilhafterweise sind an den Rückenlehnenelementen 5, 6a, 6b, 7a, 7b Hinterschneidungen vorgesehen, um eine ausreichende mechanische Belastbarkeit zwischen den Rückenlehnenelementen 5, 6a, 6b, 7a, 7b und dem dritten elastischen Element zu gewährleisten.

Die Anmelderin behält sich vor, sämtliche in den Anmeldungsunterlagen offenbarten Merkmale in Kombination mit dem Gegenstand der Ansprüche als erfindungswesentlich zu beanspruchen, sofern sie in Kombination mit dem Gegenstand der Ansprüche einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeugsitz
- 2: Rückenlehne
- 3: Rückenlehnenteil
- 4: Rückenlehnenbasiselement
- 4a: linker Seitenbereich des Rückenlehnenbasiselements
- 4b: rechter Seitenbereich des Rückenlehnenbasiselements
- 4c: mittlerer Bereich des Rückenlehnenbasiselements
- 5: mittleres Rückenlehnenelement
- 5a: oberer Abschnitt des mittleren Rückenlehnenelements
- 5b: unterer Abschnitt des mittleren Rückenlehnenelements
- 6a: linkes unteres Rückenlehnenseitenelement
- 6b: rechtes unteres Rückenlehnenseitenelement
- 7a: linkes oberes Rückenlehnenseitenelement
- 7b: rechtes oberes Rückenlehnenseitenelement
- 8a: Gelenkeinrichtung
- 8b: Gelenkeinrichtung
- 9a: linken Seitenabschnitt
- 9b: rechter Seitenabschnitt
- 10a: zweite Drehposition der Rückenlehne
- 10b: dritte Drehposition der Rückenlehne
- 10c: erste Drehposition (Grundstellung) der Rückenlehne
- 11a: Schlitz
- 11b: Schlitz
- 12a: innerer Bereich des linken Seitenabschnitts
- 12b: innerer Bereich des rechten Seitenabschnitts
- 13a: äußerer Bereich des linken Seitenabschnitts
- 13b: äußerer Bereich des rechten Seitenabschnitts
- 14: erster Kopplungsmechanismus
- 15: zweiter Kopplungsmechanismus
- 16: erstes elastisches Element
- 17: zweites elastisches Element
- 18: Grundkörper
- 18a: obere Seite des Grundkörpers
- 18b: untere Seite des Grundkörpers
- 19: Ausnehmungen
- 20: Befestigungselemente
- 22a: Kopplungsvorrichtung links
- 22b: Kopplungsvorrichtung rechts
- 23: erstes Befestigungselement
- 24: zweites Befestigungselement
- 25: drittes Befestigungselement
- 26: erste Koppelstange
- 27: zweite Koppelstange
- 28: Kugelgelenk
- 29: Polsterelemente
- 30a: oberer Randbereich des unteren Rückenlehnenseitenelements
- 30b: oberer Randbereich des unteren Rückenlehnenseitenelements
- 31a: unterer Randbereich des oberen Rückenlehnenseitenelements
- 31b: unterer Randbereich des oberen Rückenlehnenseitenelements
- 32: Sitzbasiselement
- 33: Arretierungseinrichtung
- 34: Antriebseinrichtung
- 35: Sitzteil
- 36: Trägerelemente
- 37a, 37b: oberer Bereich der unteren Rückenlehnenseitenelemente
- 38a, 38b: unterer Bereich der oberen Rückenlehnenseitenelemente
- 39: horizontale Achse
- 40a, 40b: Abstand
- 41: länglicher Abschnitt
- 42: Fixierabschnitte
- 44: weitere Gelenkeinrichtung
- 45: Rückstelleinrichtung
- 46: Zapfen
- 47a, 47b: Federn
- 48: Bereich
- A1: erste Achse
- A2: zweite Achse
- DA: Drehachse
- E1: erste Ebene
- E2: zweite Seitenebene
- E3: dritte Seitenebene
- H: Höhenachse
- LE: Längserstreckung des elastischen Elements
- LK: LängsachseLA Längsachse des mittleren Rückenlehnenelements
- SA1: erste Schwenkachse
- SA2: zweite Schwenkachse
- SA3: dritte Schwenkachse
- NA: Neigungsachse
- α_{L}: Winkel links
- α_{R}: Winkel rechts
- β₁: erster Neigungswinkel
- β₂: zweiter Neigungswinkel
- γ₂: Schwenkachse SA2
- γ₃: Schwenkachse SA3
- δ: Winkel des Schlitzes mit horizontaler Achse

- X: Tiefenachse
- Y: Breitenachse
- Z: Höhenachse

## Patentansprüche

1. Fahrzeugsitz (1) mit einer Rückenlehne (2), welche ein Rückenlehnenteil (3) und ein Rückenlehnenbasiselement (4) umfasst, wobei das Rückenlehnenteil (3) ein mittleres Rückenlehnenelement (5) umfasst, welches verschwenkbar an dem Rückenlehnenbasiselement (4) angeordnet ist,
**dadurch gekennzeichnet, dass**
das Rückenlehnenteil (3) zwei untere Rückenlehnenseitenelemente (6a, 6b) und zwei obere Rückenlehnenseitenelemente (7a, 7b) umfasst, welche jeweils mit dem mittleren Rückenlehnenelement (5) mechanisch gekoppelt sind, wobei die beiden unteren Rückenlehnenseitenelemente (6a, 6b) verschwenkbar an dem Rückenlehnenbasiselement (4) angeordnet sind, wobei jeweils zwischen einem unteren Rückenlehnenseitenelement (6a, 6b) und einem oberen Rückenlehnenseitenelement (7a, 7b) zumindest eine Gelenkeinrichtung (8a, 8b) vorgesehen ist, wobei je ein unteres Rückenlehnenseitenelement (6a, 6b) und ein oberes Rückenlehnenseitenelement (7a, 7b) in einem Winkel (α_{L}, α_{R}) zueinander angeordnet sind, wobei eine Verschwenkung des mittleren Rückenlehnenelements (5) eine Änderung der Winkel (α_{L}, α_{R}) bewirkt, wobei die Gelenkeinrichtung (8a, 8b) zumindest ein elastisches Element (16) umfasst.

2. Fahrzeugsitz (1) nach Anspruch 1,
**dadurch gekennzeichnet, dass**
ein unteres Rückenlehnenseitenelement (6a) und ein oberes Rückenlehnenseitenelement (7a) linksseitig von dem mittleren Rückenlehnenelement (5) angeordnet sind und einen linken Seitenabschnitt (9a) des Rückenlehnenteils (3) ausbilden, wobei ein unteres Rückenlehnenseitenelement (6b) und oberes Rückenlehnenseitenelement (7b) rechtsseitig von dem mittleren Rückenlehnenelement (3) angeordnet sind und einen rechten Seitenabschnitt (9b) des Rückenlehnenteils (3) ausbilden, wobei in einer Grundstellung (10c) der Rückenlehne (2) das mittlere Rückenlehnenelement (5) im Wesentlichen in einer ersten Ebene (E1) angeordnet ist, welche durch eine Höhenachse (Z) der Rückenlehne (2) und eine Breitenachse (Y) der Rückenlehne (2) aufgespannt ist, wobei in der Grundstellung (10c) der Rückenlehne (2) der linke Seitenabschnitt (9a) des Rückenlehnenteils (3) im Wesentlichen in einer zweiten Seitenebene (E2) angeordnet ist, welche durch die Höhenachse (Z) der Rückenlehne (2) und einer ersten Achse (A1) aufgespannt ist, wobei in der Grundstellung (10c) der Rückenlehne (2) der rechte Seitenabschnitt (10b) des Rückenlehnenteils (2) im Wesentlichen in einer dritten Seitenebene (E3) angeordnet ist, welche durch die Höhenachse (Z) der Rückenlehne und einer zweiten Achse (A2) aufgespannt ist, wobei die Breitenachse (Y) und die erste Achse (A1) einen ersten Neigungswinkel (β₁) einschließen, wobei die Breitenachse (Y) und zweite Achse (A2) einen Neigungswinkel (β₂) einschließen.

3. Fahrzeugsitz (1) nach Anspruch 1 oder 2,
**dadurch gekennzeichnet, dass**
zumindest in der Grundstellung (10c) der Rückenlehne (2) die oberen Rückenlehnenseitenelemente (7a, 7b) und die unteren Rückenlehnenseitenelemente (6a, 6b) voneinander beabstandet sind, wobei zumindest in der Grundstellung (10c) der Rückenlehne (2) ein Schlitz (11a, 11b) zwischen den oberen Rückenlehnenseitenelementen (7a, 7b) und den unteren Rückenlehnenseitenelementen (6a, 6b) ausgebildet ist, wobei der Schlitz (11a, 11b) sich ausgehend von einem inneren Bereich (12a, 12b) eines Seitenabschnitts (9a, 9b) des Rückenlehnenteils (3) entlang der Höhenachse (Z) schräg nach oben zu einem äußeren Bereich (13a 13b) eines Seitenabschnitts (9a, 9b) des Rückenlehnenteils (3) verläuft.

4. Fahrzeugsitz (1) nach einem der vorhergehenden Ansprüche,
**dadurch gekennzeichnet, dass**
ein erster Kopplungsmechanismus (14) vorgesehen ist, mittels welchem eine mechanische Kopplung des mittleren Rückenlehnenelements (5) mit den beiden unteren Rückenlehnenseitenelementen (6a, 6b) erfolgt, wobei ein zweiter Kopplungsmechanismus (15) vorgesehen ist, mittels welchem eine mechanische Kopplung des mittleren Rückenlehnenelements (5) mit den beiden oberen Rückenlehnenseitenelementen (7a, 7b) erfolgt, wobei durch eine Drehbewegung eines Insassen ein Krafteintrag in das Rückenlehnenteil (3) erfolgt, wobei der Krafteintrag eine Verschwenkung des mittleren Rückenlehnenelements (5) und der beiden unteren Rückenlehnenseitenelemente (6a, 6b) relativ zum Rückenlehnenbasiselement (4) verursacht.

5. Fahrzeugsitz (1) nach Anspruch 4,
**dadurch gekennzeichnet, dass**
in den äußeren Bereichen (13a, 13b) des linken Seitenabschnitts (9a) und des rechten Seitenabschnitts (9b) des Rückenlehnenteils (3) jeweils eine Gelenkeinrichtung (8a, 8b) vorgesehen ist, wobei die zumindest eine Gelenkeinrichtung (8a, 8b) zumindest abschnittsweise in dem jeweiligen Schlitz (11a, 11b) angeordnet ist, wobei bei einer Verschwenkung des mittleren Rückenlehnenelements (5) sich aufgrund der mechanischen Kopplungen und einer Auslenkung der Gelenkeinrichtung (8a, 8b) ein Abstand (40a, 40b) zwischen einem unteren Rückenlehnenseitenelement (6a, 6b) und einem oberen Rückenlehnenseitenelement (7a, 7b) zumindest in dem inneren Bereich (12a, 12b) eines Seitenabschnitts (9a, 9b) des Rückenlehnenteils (3) verändert.

6. Fahrzeugsitz (1) nach einem der vorhergehenden Ansprüche,
**dadurch gekennzeichnet, dass**
das zumindest eine erste elastisches Element (16) der Gelenkeinrichtung jeweils an einem der unteren Rückenlehnenseitenelemente (6a, 6b) und an einem oberen Rückenlehnenseitenelement (7a, 7b) direkt oder indirekt befestigt ist, wobei das zumindest eine erste elastische Element (16) eine Längserstreckung (LE) aufweist, wobei bei einer Bewegung der Rückenlehnenseitenelemente (6a, 6b, 7a, 7b) relativ zueinander das zumindest eine erste elastische Element (16) um seine Höhenerstreckung (HE) verdreht wird und expandiert oder komprimiert wird

7. Fahrzeugsitz (1) nach einem der vorhergehenden Ansprüche,
**dadurch gekennzeichnet, dass**
der zweite Kopplungsmechanismus (15) jeweils eine Kopplungsvorrichtung (22a, 22b) umfasst, mittels welcher jeweils ein oberes Rückenlehnenseitenelement (7a, 7b) an dem mittleren Rückenlehnenelement (5) angeordnet ist, wobei die Kopplungsvorrichtung (22a, 22b) zumindest ein zweites elastisches Element (17) umfasst, welches zwischen einem oberen Rückenlehnenseitenelement (7a, 7b) und dem mittleren Rückenlehnenelement (5) angeordnet ist, wobei die Kopplungsvorrichtung (22a, 22b) eine Translationsbewegung des oberen Rückenlehnenseitenelements (7a, 7b) relativ zu dem mittleren Rückenlehnenelement (5) entlang einer Längsachse (LA) des mittleren Rückenlehnenelements (5) erlaubt, wobei die Kopplungsvorrichtung (22a, 22b) eine Drehbewegung des oberen Rückenlehnenseitenelements (7a, 7b) relativ zu dem mittleren Rückenlehnenelement (5) um eine Drehachse (DA) erlaubt, welche parallel zu der Längsachse (LA) des mittleren Rückenlehnenelements (5) verlauft.

8. Fahrzeugsitz (1) nach einem der Ansprüche 2 bis 7,
**dadurch gekennzeichnet, dass**
das Rückenlehnenbasiselement (4) einen mittleren Bereich (4c) aufweist, welcher sich im Wesentlichen parallel zu der ersten Ebene (E1) erstreckt, wobei das Rückenlehnenbasiselement (4) zwei Seitenbereiche (4a, 4b) aufweist, wobei ein linker Seitenbereich (4a) des Rückenlehnenbasiselements (4) sich im Wesentlichen parallel zu der zweiten Seitenebene (E2) erstreckt, wobei ein rechter Seitenbereich (4b) des Rückenlehnenbasiselements (4) sich im Wesentlichen parallel zu der dritten Seitenebene (E3) erstreckt.

9. Fahrzeugsitz (1) nach Anspruch 8,
**dadurch gekennzeichnet, dass**
die unteren Rückenlehnenseitenelemente (6a, 6b) jeweils um eine zweite Schwenkachse (SA2) oder dritte Schwenkachse (SA3) verschwenkbar an den Seitenbereichen (4a, 4b) des Rückenlehnenbasiselements (4) angeordnet sind, wobei die zweite Schwenkachse (SA2) und dritte Schwenkachse (SA3) sich entlang der Längsachse (X) und der Höhenachse (Z) schräg nach oben sich erstrecken, wobei ein zweites Befestigungselement (24) vorgesehen ist, welches mit dem linksseitig angeordneten unteren Rückenlehnenseitenelement (6a) fest verbunden ist und welches verschwenkbar um die zweite Schwenkachse (SA2) ist, wobei ein drittes Befestigungselement (25) vorgesehen ist, welches mit dem rechtsseitig angeordneten unteren Rückenlehnenseitenelement (6b) fest verbunden ist und welches verschwenkbar um die dritte Schwenkachse (SA3) ist.

10. Fahrzeugsitz (1) nach einem der Ansprüche 4 bis 9,
**dadurch gekennzeichnet, dass**
der erste Kopplungsmechanismus (14) eine Schwenkbewegung eines ersten Befestigungselements (23) zu dem zweiten Befestigungselement (24) und dem dritten Befestigungselement (25) überträgt und umgekehrt, wobei der erste Kopplungsmechanismus (14) eine erste Koppelstange (26) aufweist, welche das erste Befestigungselement (23) und das zweite Befestigungselement (24) verbindet, wobei der erste Kopplungsmechanismus (14) eine zweite Koppelstange (27) aufweist, welche das erste Befestigungselement (23) und das dritte Befestigungselement (25) verbindet.

11. Fahrzeugsitz (1) nach einem der vorhergehenden Ansprüche,
**dadurch gekennzeichnet, dass**
die oberen Rückenlehnenseitenelemente (7a, 7b) und die unteren Rückenlehnenseitenelemente (6a, 6b) als plattenartige Elemente ausgebildet sind, wobei die plattenartigen Elemente zur Aufnahme von Polsterelementen (29) ausgebildet sind.

12. Fahrzeugsitz (1) nach einem der vorhergehenden Ansprüche,
**dadurch gekennzeichnet, dass**
bei einer Verschwenkung des mittleren Rückenlehnenelements (5) zu einem Seitenabschnitt (9a, 9b) des Rückenlehnenteils (3) hin der Winkel (α_{L}, α_{R}) ein stumpfer Winkel ist, wobei bei einer Verschwenkung des mittleren Rückenlehnenelements (5) zu einem Seitenabschnitt (9a, 9b) des Rückenlehnenteils (3) hin ein oberer Randbereich (30a, 30b) eines unteren Rückenlehnenseitenelements (6a, 6a) und ein unterer Randbereich (31a, 31b) des oberen Rückenlehnenseitenelements (7a, 7b) zumindest in einem äußeren Randbereich (13a, 13b) des Seitenabschnitts (9a, 9b) entlang der Längsachse (X) nach vorne verlagert.

13. Fahrzeugsitz (1) nach einem der vorhergehenden Ansprüche,
**dadurch gekennzeichnet, dass**
das mittlere Rückenlehnenelement (5) zweiteilig ausgestaltet ist, wobei die beiden Abschnitte (5a, 5b) des mittleren Rückenlehnenelements (5) durch eine weitere Gelenkeinrichtung (44) miteinander verbunden sind, wobei die Gelenkeinrichtung in einem unteren Bereich des mittleren Rückenlehnenelements (5) angeordnet ist, wobei ein oberer Abschnitt (5a) des mittleren Rückenlehnenelements (5) relativ zu dem unteren Abschnitt (5b) entlang der Längsachse (X) verschwenkbar ist.

14. Fahrzeugsitz (1) nach einem der vorhergehenden Ansprüche,
**dadurch gekennzeichnet, dass**
eine Arretierungseinrichtung (33) vorgesehen ist, mittels welcher eine Drehposition (10a, 10b, 10c) des Rückenlehnenteils (3) arretierbar ist, wobei eine Rückstelleinrichtung (45) vorgesehen ist, mittels welcher das Rückenlehnenteil 3 in die Grundstellung 10c rückführbar ist.

15. Fahrzeugsitz (1) nach einem der vorhergehenden Ansprüche,
**dadurch gekennzeichnet, dass**
eine Antriebseinrichtung (34) vorgesehen ist, mittels welcher das Rückenlehnenteil (3) in eine Drehposition (10a, 10b, 10c) bringbar ist.

## Claims

1. Vehicle seat (1) having a backrest (2) which comprises a backrest part (3) and a backrest base element (4), the backrest part (3) comprising a middle backrest element (5) which is arranged pivotably on the backrest base element (4),
**characterised in that**
the backrest part (3) comprises two lower backrest side elements (6a, 6b) and two upper backrest side elements (7a, 7b), which are each mechanically coupled to the middle backrest element (5), wherein the two lower backrest side elements (6a, 6b) are arranged pivotably on the backrest base element (4), wherein at least one joint device (8a, 8b) is provided in each case between a lower backrest side element (6a, 6b) and an upper backrest side element (7a, 7b), wherein a lower backrest side element (6a, 6b) and an upper backrest side element (7a, 7b) are arranged at an angle (α_{L}, α_{R}) to one another, wherein pivoting of the middle backrest element (5) causes a change in the angle (α_{L}, α_{R}), wherein the joint device (8a, 8b) comprises at least one elastic element (16).

2. Vehicle seat (1) according to claim 1,
**characterised in that**
a lower backrest side element (6a) and an upper backrest side element (7a) are arranged on the left side of the middle backrest element (5) and form a left side portion (9a) of the backrest part (3), wherein a lower backrest side element (6b) and an upper backrest side element (7b) are arranged on the right side of the middle backrest element (3) and form a right side portion (9b) of the backrest part (3), wherein in an initial position (10c) of the backrest (2) the middle backrest element (5) is arranged substantially in a first plane (E1) which is spanned by a height axis (Z) of the backrest (2) and a width axis (Y) of the backrest (2), wherein in the initial position (10c) of the backrest (2) the left side portion (9a) of the backrest part (3) is arranged substantially in a second side plane (E2) which is spanned by the height axis (Z) of the backrest (2) and a first axis (A1), wherein in the initial position (10c) of the backrest (2) the right side portion (10b) of the backrest part (2) is arranged substantially in a third side plane (E3) which is defined by the height axis (Z) of the backrest and a second axis (A2), wherein the width axis (Y) and the first axis (A1) enclose a first angle of inclination (β₁), wherein the width axis (Y) and second axis (A2) enclose an angle of inclination (β₂).

3. Vehicle seat (1) according to either claim 1 or claim 2,
**characterised in that**
at least in the initial position (10c) of the backrest (2), the upper backrest side elements (7a, 7b) and the lower backrest side elements (6a, 6b) are spaced apart from one another, wherein at least in the initial position (10c) of the backrest (2) a slot (11a, 11b) is formed between the upper backrest side elements (7a, 7b) and the lower backrest side elements (6a, 6b), wherein the slot (11a, 11b) extends from an inner region (12a, 12b) of a side portion (9a, 9b) of the backrest part (3) obliquely upwards along the height axis (Z) to an outer region (13a, 13b) of a side portion (9a, 9b) of the backrest part (3).

4. Vehicle seat (1) according to any of the preceding claims,
**characterised in that**
a first coupling mechanism (14) is provided, by means of which the middle backrest element (5) is mechanically coupled to the two lower backrest side elements (6a, 6b), wherein a second coupling mechanism (15) is provided, by means of which the middle backrest element (5) is mechanically coupled to the two upper backrest side elements (7a, 7b), wherein a force is introduced into the backrest part (3) by a turning movement of an occupant, wherein the introduction of force causes the middle backrest element (5) and the two lower backrest side elements (6a, 6b) to pivot relative to the backrest base element (4).

5. Vehicle seat (1) according to claim 4,
**characterised in that**
a joint device (8a, 8b) is provided in each of the outer regions (13a, 13b) of the left side portion (9a) and of the right side portion (9b) of the backrest part (3), wherein the at least one joint device (8a, 8b) is arranged at least in portions in the associated slot (11a, 11b), wherein when the middle backrest element (5) is pivoted, the distance (40a, 40b) between a lower backrest side element (6a, 6b) and an upper backrest side element (7a, 7b) changes at least in the inner region (12a, 12b) of a side portion (9a, 9b) of the backrest part (3) due to the mechanical couplings and a deflection of the joint device (8a, 8b).

6. Vehicle seat (1) according to any of the preceding claims,
**characterised in that**
the at least one first elastic element (16) of the joint device is fastened directly or
indirectly to one of the lower backrest side elements (6a, 6b) and to an upper backrest side element (7a, 7b), wherein the at least one first elastic element (16) has a longitudinal extent (LE), wherein when the backrest side elements (6a, 6b, 7a, 7b) move relative to one another the at least one first elastic element (16) is rotated about its vertical extent (HE) and is expanded or compressed.

7. Vehicle seat (1) according to any of the preceding claims,
**characterised in that**
the second coupling mechanism (15) comprises a coupling device (22a, 22b), by means of which in each case an upper backrest side element (7a, 7b) is arranged on the middle backrest element (5), wherein the coupling device (22a, 22b) comprises at least one second elastic element (17), which is arranged between an upper backrest side element (7a, 7b) and the middle backrest element (5), wherein the coupling device (22a, 22b) allows a translational movement of the upper backrest side element (7a, 7b) relative to the middle backrest element (5) along a longitudinal axis (LA) of the middle backrest element (5), wherein the coupling device (22a, 22b) allows a rotary movement of the upper backrest side element (7a, 7b) relative to the middle backrest element (5) about an axis of rotation (DA) which runs parallel to the longitudinal axis (LA) of the middle backrest element (5).

8. Vehicle seat (1) according to any of claims 2 to 7,
**characterised in that**
the backrest base element (4) has a middle region (4c) which extends substantially parallel to the first plane (E1), wherein the backrest base element (4) has two side regions (4a, 4b), wherein a left side region (4a) of the backrest base element (4) extends substantially parallel to the second side plane (E2), wherein a right side region (4b) of the backrest base element (4) extends substantially parallel to the third side plane (E3).

9. Vehicle seat (1) according to claim 8,
**characterised in that**
the lower backrest side elements (6a, 6b) are in each case arranged on the side regions (4a, 4b) of the backrest base element (4) so as to be pivotable about a second pivot axis (SA2) or a third pivot axis (SA3), wherein the second pivot axis (SA2) and the third pivot axis (SA3) extend obliquely upwards along the longitudinal axis (X) and the height axis (Z), wherein a second fastening element (24) is provided, which is firmly connected to the lower backrest side element (6a) arranged on the left and which is pivotable about the second pivot axis (SA2), wherein a third fastening device (25) is provided, which is firmly connected to the lower backrest side element (6b) arranged on the right side and which is pivotable about the third pivot axis (SA3).

10. Vehicle seat (1) according to any of claims 4 to 9,
**characterised in that**
the first coupling mechanism (14) transmits a pivoting movement of a first fastening element (23) to the second fastening element (24) and the third fastening element (25) and vice versa, wherein the first coupling mechanism (14) has a first coupling rod (26) which connects the first fastening element (23) and the second fastening element (24), wherein the first coupling mechanism (14) has a second coupling rod (27) which connects the first fastening element (23) and the third fastening element (25).

11. Vehicle seat (1) according to any of the preceding claims,
**characterised in that**
the upper backrest side elements (7a, 7b) and the lower backrest side elements (6a, 6b) are designed as plate-like elements, wherein the plate-like elements are designed to accommodate upholstery elements (29).

12. Vehicle seat (1) according to any of the preceding claims,
**characterised in that**
when the middle backrest element (5) is pivoted towards a side portion (9a, 9b) of the backrest part (3) the angle (α_{L}, α_{R}) is an obtuse angle, wherein when the middle backrest element (5) is pivoted towards a side portion (9a, 9b) of the backrest part (3) an upper edge region (30a, 30b) of a lower backrest side element (6a, 6a) and a lower edge region (31a, 31b) of the upper backrest side element (7a, 7b) are displaced forwards at least in an outer edge region (13a, 13b) of the side portion (9a, 9b) along the longitudinal axis (X).

13. Vehicle seat (1) according to any of the preceding claims,
**characterised in that**
the middle backrest element (5) is designed in two parts, wherein the two portions (5a, 5b) of the middle backrest element (5) are connected to one another by a further joint device (44), wherein the joint device is arranged in a lower region of the middle backrest element (5), wherein an upper portion (5a) of the middle backrest element (5) is pivotable relative to the lower portion (5b) along the longitudinal axis (X).

14. Vehicle seat (1) according to any of the preceding claims,
**characterised in that**
a locking device (33) is provided, by means of which a rotational position (10a, 10b, 10c) of the backrest part (3) can be locked, wherein a resetting device (45) is provided, by means of which the backrest part 3 can be returned to the initial position (10c).

15. Vehicle seat (1) according to any of the preceding claims,
**characterised in that**
a drive unit (34) is provided, by means of which the backrest part (3) can be brought into a rotational position (10a, 10b, 10c).

## Revendications

1. Siège de véhicule (1) ayant un dossier (2), lequel comporte une partie dossier (3) et un élément de base de dossier (4), la partie dossier (3) comportant un élément central de dossier (5), lequel est disposé de manière pivotante sur l'élément de base de dossier (4),
**caractérisé par le fait que**
la partie dossier (3) comporte deux éléments latéraux inférieurs de dossier (6a, 6b) et deux éléments latéraux supérieurs de dossier (7a, 7b), lesquels sont chacun couplés mécaniquement à l'élément central de dossier (5), les deux éléments latéraux inférieurs de dossier (6a, 6b) étant disposés de manière à pouvoir pivoter sur l'élément de base de dossier (4), au moins un dispositif d'articulation (8a, 8b) étant prévu dans chaque cas entre un élément latéral inférieur de dossier (6a, 6b) et un élément latéral supérieur de dossier (7a, 7b), un élément latéral inférieur de dossier (6a, 6b) et un élément latéral supérieur de dossier (7a, 7b) étant dans chaque cas disposés selon un angle (α_{L}, α_{R}) l'un par rapport à l'autre, un pivotement de l'élément central de dossier (5) provoquant une modification de l'angle (α_{L}, α_{R}), le dispositif d'articulation (8a, 8b) comportant au moins un élément élastique (16).

2. Siège de véhicule (1) selon la revendication 1,
**caractérisé par le fait qu'**
un élément latéral inférieur de dossier (6a) et un élément latéral supérieur de dossier (7a) sont disposés du côté gauche de l'élément central de dossier (5) et forment une partie latérale gauche (9a) de la partie dossier (3), un élément latéral inférieur de dossier (6b) et un élément latéral supérieur de dossier (7b) étant disposés du côté droit de l'élément central de dossier (5) et formant une partie latérale droite (9b) de la partie dossier (3), où, dans une position de base (10c) du dossier (2), l'élément central de dossier (5) est disposé sensiblement dans un premier plan (E1) qui est défini par un axe de hauteur (Z) du dossier (2) et un axe de largeur (Y) du dossier (2), où, dans la position de base (10c) du dossier (2), la partie latérale gauche (9a) de la partie dossier (3) est disposée sensiblement dans un deuxième plan latéral (E2), lequel est défini par l'axe de hauteur (Z) du dossier (2) et un premier axe (A1), où, dans la position de base (10c) du dossier (2), la partie latérale droite (10b) de la partie dossier (3) est disposée sensiblement dans un troisième plan latéral (E3), lequel est défini par l'axe de hauteur (Z) du dossier et un second axe (A2), l'axe de largeur (Y) et le premier axe (A1) formant un premier angle d'inclinaison (β₁), l'axe de largeur (Y) et le second axe (A2) formant un angle d'inclinaison (β₂).

3. Siège de véhicule (1) selon l'une des revendications 1 ou 2,
**caractérisé par le fait qu'**
au moins dans la position de base (10c) du dossier (2), les éléments latéraux supérieurs de dossier (7a, 7b) et les éléments latéraux inférieurs de dossier (6a, 6b) sont espacés les uns des autres, où, au moins dans la position de base (10c) du dossier (2), une fente (11a, 11b) est formée entre les éléments latéraux supérieurs de dossier (7a, 7b) et les éléments latéraux inférieurs de dossier (6a, 6b), la fente (11a, 11b) s'étendant obliquement vers le haut le long de l'axe de hauteur (Z) à partir d'une zone intérieure (12a, 12b) d'une partie latérale (9a, 9b) de la partie dossier (3) vers une zone extérieure (13a, 13b) d'une partie latérale (9a, 9b) de la partie dossier (3).

4. Siège de véhicule (1) selon l'une des revendications précédentes,
**caractérisé par le fait qu'**
un premier mécanisme de couplage (14) est prévu, au moyen duquel a lieu un couplage mécanique de l'élément central de dossier (5) avec les deux éléments latéraux inférieurs de dossier (6a, 6b), un second mécanisme de couplage (15) étant prévu, au moyen duquel a lieu un couplage mécanique de l'élément central de dossier (5) avec les deux éléments latéraux supérieurs de dossier (7a, 7b), où, par un mouvement de rotation d'un occupant, a lieu une application de force dans la partie dossier (3), l'application de force provoquant un pivotement de l'élément central de dossier (5) et des deux éléments latéraux inférieurs de dossier (6a, 6b) par rapport à l'élément de base de dossier (4).

5. Siège de véhicule (1) selon la revendication 4,
**caractérisé par le fait que**,
dans les zones extérieures (13a, 13b) de la partie latérale gauche (9a) et de la partie latérale droite (9b) de la partie dossier (3), un dispositif d'articulation (8a, 8b) est dans chaque cas prévu, ledit au moins un dispositif d'articulation (8a, 8b) étant au moins par endroits disposé dans la fente respective (11a, 11b), où, lors d'un pivotement de l'élément central de dossier (5), une distance (40a, 40b) entre un élément latéral inférieur de dossier (6a, 6b) et un élément latéral supérieur de dossier (7a, 7b) varie au moins dans la zone intérieure (12a, 12b) d'une partie latérale (9a, 9b) de la partie dossier (3) en raison des couplages mécaniques et d'une déflexion du dispositif d'articulation (8a, 8b).

6. Siège de véhicule (1) selon l'une des revendications précédentes,
**caractérisé par le fait que**
ledit au moins un premier élément élastique (16) du dispositif d'articulation est fixé directement ou indirectement dans chaque cas à l'un des éléments latéraux inférieurs de dossier (6a, 6b) et à un élément latéral supérieur de dossier (7a, 7b), ledit au moins un premier élément élastique (16) présentant une étendue longitudinale (LE), où, lors d'un déplacement des éléments latéraux de dossier (6a, 6b, 7a, 7b) l'un par rapport à l'autre, ledit au moins un premier élément élastique (16) est tourné autour de son étendue en hauteur (HE) et est étendu ou comprimé.

7. Siège de véhicule (1) selon l'une des revendications précédentes,
**caractérisé par le fait que**
le second mécanisme de couplage (15) comporte dans chaque cas un dispositif de couplage (22a, 22b), au moyen duquel dans chaque cas un élément latéral supérieur de dossier (7a, 7b), est disposé sur l'élément central de dossier (5), le dispositif de couplage (22a, 22b) comportant au moins un second élément élastique (17), lequel est disposé entre un élément latéral supérieur de dossier (7a, 7b) et l'élément central de dossier (5), le dispositif de couplage (22a, 22b) permettant un mouvement de translation de l'élément latéral supérieur de dossier (7a, 7b) par rapport à l'élément central de dossier (5) le long d'un axe longitudinal (LA) de l'élément central de dossier (5), le dispositif de couplage (22a, 22b) permettant un mouvement de rotation de l'élément latéral supérieur de dossier (7a, 7b) par rapport à l'élément central de dossier (5) autour d'un axe de rotation (DA), lequel s'étend parallèlement à l'axe longitudinal (LA) de l'élément central de dossier (5).

8. Siège de véhicule (1) selon l'une des revendications 2 à 7,
**caractérisé par le fait que**
l'élément de base de dossier (4) présente une zone centrale (4c), laquelle s'étend sensiblement parallèlement au premier plan (E1), l'élément de base de dossier (4) présentant deux zones latérales (4a, 4b), une zone latérale gauche (4a) de l'élément de base de dossier (4) s'étendant sensiblement parallèlement au deuxième plan latéral (E2), une zone latérale droite (4b) de l'élément de base de dossier (4) s'étendant sensiblement parallèlement au troisième plan latéral (E3).

9. Siège de véhicule (1) selon la revendication 8,
**caractérisé par le fait que**
les éléments latéraux inférieurs de dossier (6a, 6b) sont dans chaque cas disposés sur les zones latérales (4a, 4b) de l'élément de base de dossier (4) de manière à pouvoir pivoter autour d'un deuxième axe de pivotement (SA2) ou d'un troisième axe de pivotement (SA3), le deuxième axe de pivotement (SA2) et le troisième axe de pivotement (SA3) s'étendant obliquement vers le haut le long de l'axe longitudinal (X) et de l'axe de hauteur (Z), un deuxième élément de fixation (24) étant prévu, lequel est solidaire de l'élément latéral inférieur de dossier (6a) disposé du côté gauche et lequel est apte à pivoter autour du deuxième axe de pivotement (SA2), un troisième élément de fixation (25) étant prévu, lequel est solidaire de l'élément latéral inférieur de dossier (6b) disposé du côté droit et lequel est apte à pivoter autour du troisième axe de pivotement (SA3).

10. Siège de véhicule (1) selon l'une des revendications 4 à 9,
**caractérisé par le fait que**
le premier mécanisme de couplage (14) transmet un mouvement de pivotement d'un premier élément de fixation (23) au deuxième élément de fixation (24) et au troisième élément de fixation (25) et inversement, le premier mécanisme de couplage (14) présentant une première barre de couplage (26), laquelle relie le premier élément de fixation (23) et le deuxième élément de fixation (24), le premier mécanisme de couplage (14) présentant une deuxième barre de couplage (27), laquelle relie le premier élément de fixation (23) et le troisième élément de fixation (25).

11. Siège de véhicule (1) selon l'une des revendications précédentes,
**caractérisé par le fait que**
les éléments latéraux supérieurs de dossier (7a, 7b) et les éléments latéraux inférieurs de dossier (6a, 6b) sont conçus comme éléments en forme de plaque, les éléments en forme de plaque étant conçus pour recevoir des éléments de rembourrage (29).

12. Siège de véhicule (1) selon l'une des revendications précédentes,
**caractérisé par le fait que**
lors d'un pivotement de l'élément central de dossier (5) vers une partie latérale (9a, 9b) de la partie dossier (3), l'angle (α_{L}, α_{R}) est un angle obtus, où, lors d'un pivotement de l'élément central de dossier (5) vers une partie latérale (9a, 9b) de la partie dossier (3), une zone de bord supérieure (30a, 30b) d'un élément latéral inférieur de dossier (6a, 6a) et une zone de bord inférieure (31a, 31b) de l'élément latéral supérieur de dossier (7a, 7b) se déplacent vers l'avant le long de l'axe longitudinal (X) au moins dans une zone de bord extérieure (13a, 13b) de la partie latérale (9a, 9b).

13. Siège de véhicule (1) selon l'une des revendications précédentes,
**caractérisé par le fait que**
l'élément central de dossier (5) est conçu en deux parties, les deux parties (5a, 5b) de l'élément central de dossier (5) étant reliées l'une à l'autre par un autre dispositif d'articulation (44), le dispositif d'articulation étant disposé dans une zone inférieure de l'élément central de dossier (5), une partie supérieure (5a) de l'élément central de dossier (5) étant apte à pivoter par rapport à la partie inférieure (5b) le long de l'axe longitudinal (X).

14. Siège de véhicule (1) selon l'une des revendications précédentes,
**caractérisé par le fait qu'**
un dispositif de verrouillage (33) est prévu, au moyen duquel une position de rotation (10a, 10b, 10c) de la partie dossier (3) est verrouillable, un dispositif de rappel (45) étant prévu, au moyen duquel la partie dossier (3) est apte à être amenée dans la position de base (10c).

15. Siège de véhicule (1) selon l'une des revendications précédentes,
**caractérisé par le fait qu'**
un dispositif d'entraînement (34) est prévu, au moyen duquel la partie dossier (3) est apte à être amenée dans une position de rotation (10a, 10b, 10c).
